# EUROPEAN PATENT APPLICATION

(11) **EP 1 517 277 A2**
(43) Date of publication of application: **23.03.2005**
(21) Application number: 04022462.8
(22) Date of filing: 21.09.2004
(51) Int. Cl.: G07F 7/10

(54) **Secure device and information processing unit**

(30) Priority: 22.09.2003 JP 2003329934; 22.09.2003 JP 2003329935; 07.06.2004 JP 2004168283
(71) Applicant: MATSUSHITA ELECTRIC INDUSTRIAL CO., LTD., Kadoma-shi, Osaka 571-8501 (JP)
(72) Inventor: Minemura, Atsushi, Tokyo 173-0031 (JP)
(74) Representative: Grünecker, Kinkeldey, Stockmair & Schwanhäusser Anwaltssozietät

(57) **Abstract**

The present invention provides a multi-application IC card capable of displaying a plurality of card functions internally incorporated so as to be easily comprehensible. Further, it provides an information processing unit such as a mobile terminal device to utilize card functions with the corresponding IC card held. In the invention, the IC card 10 having a plurality of card functions is configured so as to hold obverse side data to display images 21 and 22 of the obverse sides of respective cards. Using the obverse side data, it is possible to display the images 21 and 22 of the obverse sides of the cards expressing respective card functions of the IC card 10, wherein a user is able to intuitively interpret the types of card functions internally incorporated in the IC card 10 on the basis of the obverse side images 21 and 22.

## Description

### Background of the Invention

### Field of the Invention

The present invention relates to a secure device such as an IC card having a plurality of card functions, and an information processing unit such as a cellular phone, PDA, etc., using card functions of the secure device with the secure device retained, which facilitates reading and selection of applications stored in cards and improves convenience of the secure device having card functions.

### Description of the Related Art

In recent years, credit cards, cash cards, reward cards (cards in which points are added in response to purchase amount in stores), passes, IC telephone cards, magnetic cards, and IC cards have become widespread. In either of the cards, not only are the cards uniquely designed and decorated, but also data such as a name of the cardholder, validity period of the card, etc., are contained on the obverse side thereof. Also, instructions for use of the card, one's own signature for confirming the cardholder, and a bar code showing the card member number, etc., are contained on the reverse side of the card.

Therefore, not only it is possible to visually recognize and judge the type of card, and services, which can be utilized by the card holder, on the obverse side of the card, but it is also possible to confirm information necessary for utilization of the case on the reverse side of the card.

In recent years, a multi-function type card (hereinafter called a "multi-application IC card") has been developed, in which a plurality of card functions are incorporated in a single IC card, for example, a card which can be used as a cash card and a pass, in line with downsizing of IC chips and advancement in encryption of information. If the multi-application IC card is utilized, it is not necessary to hold a plurality of cards, wherein convenience of a user can be expected.

On the other hand, there is a problem in the multi-application IC card in that it is difficult to identify a number of functions, which the corresponding IC card has, only by glancing at the obverse side thereof.

Generally, information of an IC card is read by using a reader/writer. For example, in Patent Document 1 (Japanese Unexamined Patent Publication No. 2002-345037), such a configuration is disclosed, in which an IC card capable of executing contactless and contact communications is incorporated in a mobile communications unit, information of the IC card is read and written by the contact communications between the IC card and the mobile communications unit, and information of the IC card is read and written by the contactless communications between the IC card and a peripheral unit.

Therefore, as a method for reading information of a multi-application IC card, for example, services which can be utilized, such a method may be listed (FIG. 39), in which the multi-application IC card is mounted in a mobile information terminal and a service menu is displayed on the display screen of the corresponding mobile information terminal.

However, it is difficult for a user to instantaneously interpret the contents of description in display of the service menu in the form of text. Also, since identification systems of applications necessary to utilize services differ from each other, it is difficult to make access to respective applications and to acquire information which compose the above-described service menu. At the same time, a cumbersome operation is also required.

In addition, such a method can be considered, in which characters and symbols are printed on the obverse side of a multi-application IC card, and all services which can be utilized are displayed. However, generally, the area of the obverse side of a card is narrow, wherein it is difficult to print a sizable amount of information. Even if it could be printed, it would be difficult for a user to read. In other words, there is a premise in that services which can be utilized in a multi-application IC card can be modified by addition and/or deletion, wherein a display method applicable to such modification of service contents is preferred. Accordingly, it cannot be said that a method of printing data on the obverse side of a card is adequate for the features of a multi-application IC card.

In addition, when changing the display of card functions by displaying one card function after displaying another card function in the case of displaying information regarding a plurality of card functions and reading the same, identification to an application corresponding to a card function is required in respective changeover of display, and its operation is cumbersome.

Therefore, a remote controller in which a gyroscope is incorporated may be listed as an art, related to the present invention, for operating a set without any cumbersome operation. The remote controller is described in Non-Patent Document 1 (" {http://hotwired.goo.ne.jp/news/news/technology/story/20 030623302.html} : "Remote controller capable of operating a personal computer only by "swing""). With the remote controller, upward swinging thereof increases the volume of a personal computer having a television function and/or a DVD player or soups up the screen.

### Summary of the Invention

The present invention was developed to solve such problems in related arts. It is therefore an object of the invention to provide an information processing unit of a mobile communications terminal capable of displaying a plurality of card functions, which a secure device of an IC card, etc., has, in a format easily identifiable by a user, and a secure device therefor.

In the present invention, an information memory unit (secure unit) is provided with card information storing means for storing card information (card applications, card magnetic information, etc.) in order to carry out processes regarding optional cards and obverse side data storing means for storing obverse side data in order to display images of the obverse sides of cards corresponding to card information.

Using the obverse side data, it is possible to display images of the obverse side of a card expressing the card function of an information storing unit, and it is also possible to intuitively interpret the card function incorporated in the information storing unit on the basis of the obverse side image.

Also, the obverse side data storing means of an information storing unit according to the invention is composed so as to hold surface data in order to display the surface image of the card as the obverse side data, and further it may be composed so as to hold the reverse side data in order to display the image of the reverse side of a card. Further, the information storing unit according to the invention may hold data (sound data) of symbolic sounds of an enterprise who provides services of the card and data of deformation images (deformation image data) such as the brand mark of an enterprise who provides services of the card.

Such an information storing unit is composed so as for a user to instantaneously interpret card functions, which can be utilized by a multi-application IC card, by displaying images corresponding to the card surface and images corresponding to the reverse side of the card on the basis of the surface data and reverse side data. Further, by ringing sounds on the basis of the above-described sound data along with displaying the obverse side data or independently or by displaying the deformation image data, it is possible for a user to instantaneously interpret the card functions that can be easily utilized by the user.

In addition, in a case where the information storing unit according to the invention is independently used since the information storing unit is provided with means for displaying the image of the obverse side by using the obverse side data, it is possible to display the image of the obverse side expressing the card functions of the information storing unit on the displaying means. The displaying means is provided with the first displaying means and the second displaying means, and may separately display the image of the surface data and image of the reverse side data, whereby it is possible to display the surface and reverse side of the card in the information storing unit as in the real card. Convenience can be further improved for users. Or, it may be composed that the image of the reverse side of a card is displayed on one displaying means next to the image of the surface of the card or the image of the surface is displayed next to the image of the reverse side. By displaying the surface and the reverse side of the card on the displaying means, it is possible for a user to interpret the card functions.

Also, the invention provides an information processing unit (mobile terminal unit, PDA, etc.) for utilizing card functions, which the information storing unit has, with the information storing unit (secure device) held.

An information processing unit according to the invention is an information processing unit for making access to an information storing unit, which holds card information to carry out processes regarding optional cards and obverse side data to display images of the obverse side of a card corresponding to the card information, and for reading the obverse side data. The information processing unit includes means for displaying an image on the basis of the obverse side data read out from the information storing unit, means for receiving a display instruction of the obverse side image, and means for controlling read-out of the obverse side data and image display of the displaying means on the basis of a display instruction received by the display instruction receiving means.

The information processing unit is capable of reading out obverse side data from a device and an internally incorporated information storing unit or an information storing unit to which an access is made by contact communications or contactless communications and of displaying the card obverse side image expressing the card functions internally incorporated in the information storing unit. A user is able to intuitively interpret the card functions of the information storing unit on the basis of the obverse side image.

Further, the invention may be provided with the first displaying means for displaying the image of the surface using the surface data stored in the information storing unit and the second displaying means for displaying the image of the reverse side using the reverse side data stored in the information storing unit. Or, one displaying means may display the image of the surface and that of the reverse side by turns.

Still further, the information processing unit according to the invention may be provided with display data processing means for processing the obverse side data read out from the information storing unit in response to the display size of the displaying means and display resolution power thereof. By the display processing means, the obverse side image can be displayed in the displaying means by the obverse side data processed in accordance with the displaying means which the information processing unit has. In addition, it becomes possible to make the obverse side data in a real size regardless of the size of the obverse side data. Therefore, with the information processing unit according to the invention, it is possible to intuitively interpret the obverse side data as if the image is a single type of a real size card.

Also, where the information storing unit holds data of the deformation image in addition to the obverse side data, it may be composed that the data of the deformation image is first read out and the deformation image is displayed in the displaying means, and the obverse side data is next read out and the image of the obverse side is displayed in the displaying means. Since there is a great deal of data and the data is securely maintained, the deformation image which does not require time in reading out is displayed until commencing the display of an obverse side image which requires some reading-out time, whereby convenience of a user can be improved.

In addition, an information processing unit according to the invention is provided with means for selecting display contents to be displayed in the information processing unit on the basis of a screen size of the displaying means and display resolution power thereof, and the information processing unit reads out and display data selected by the display data selecting means from the information storing unit that holds data of a deformation image in addition to the obverse side data.

The information processing unit selects and displays an obverse side image or a deformation image in response to the screen size of the displaying means and resolution power thereof.

In addition, the information processing unit according to the invention carries out display using the obverse side data or data of deformation images selected by the display data selecting means from the information storing unit in which deformation image data and sound data are held in addition to the obverse side data, and carries out ringing of sounds. According to the configuration, the information processing unit is capable of displaying a deformation image of the brand name of an enterprise who executes services of the card, in addition to the obverse side image, and of ringing symbolic sounds of the enterprise, wherein it becomes easier still for a user to interpret the card functions.

Furthermore, the information processing unit according to the invention reads out all the obverse side data from the information storing unit and holds the same in the memory area, and displays an image of the obverse side in the displaying means by using the obverse side data read out from the memory area, wherein the obverse side data in the memory area is periodically updated by the obverse side data read out from the information storing unit. Therefore, it becomes quicker to display the obverse side image in the displaying means. In addition, by updating the obverse side data in the memory area, falsification or alteration of the obverse side data held in a usual memory area can be prevented from occurring.

Also, the display instruction receiving means of the information processing unit according to the invention is composed so that it detects swing of the information processing unit and receives it as a display instruction. For this reason, a user swings the information processing unit and displays an obverse side image, and can update the obverse side image, wherein it is possible to change over images without any complicated operation.

Image display of the displaying means may be controlled on the basis of detection information of the display instruction receiving means and status of the information processing unit, or an image to be displayed may be changed over on the basis of the direction detected by the display instruction receiving means. Further, where no next swing is detected for a fixed period of time after the display instruction receiving means detects swing, the information processing unit may be controlled to the status before displaying the obverse side data. Also, the controlling means may control power supply to the information storing means on the detection information, whereby useless power consumption can be saved.

Further, in the present invention, the information processing unit incorporating an information storing unit that holds a plurality of card information (card applications, card magnetic information, etc.) to carry out processing regarding an optional card and obverse side data to display an image of the obverse side of the card corresponding to the card information is provided with means for reading out obverse side data from the information storing unit, means for displaying an image of the obverse side using the obverse side data thus read out, and means for controlling the obverse side data reading means, displaying means and processing regarding the card information.

The information processing unit reads out obverse side data from an information storing unit mounted or incorporated therein, and sequentially displays images of the card obverse sides expressing respective card functions incorporated in the information storing unit in the displaying means. A user is able to interpret a card function to be used, from the obverse side image.

Also, the information processing unit incorporating an information storing unit includes terminals connected to the information storing unit by means of various connection patterns such as a fixed connection type terminal in which an IC chip is incorporated, and a detachable connection type terminal having a card slot, etc.

In addition, in the information processing unit according to the present invention, when the information storing unit carries out a process regarding the card information selected by communications with a peripheral device, the displaying means displays an image of the obverse side corresponding to the card information at the time of commencement of the process.

By exposing an information processing unit, on which the obverse side image of card information to be used is displayed, onto a POS terminal, a process is commenced by the selected card.

Further, the information processing unit according to the invention is provided with lock application designating means for designating all the card information other than the card information corresponding to the obverse side displayed in the displaying means and for instructing commencement and stop of the designated card information.

For this reason, a card process carried out by the information storing unit on the basis of an instruction of a peripheral reader/writer is limited to a process with the card function corresponding to the obverse side image displayed on the display screen of the information processing unit.

Further, the lock application designating means of the information processing unit according to the invention gives the information storing unit an instruction of denying selection of a peripheral device corresponding to the designated card information only one time.

Therefore, the card function designated by the lock application designating means is locked only one time with respect to selection of the peripheral reader/writer.

Also, the controlling means of the information processing unit according to the invention controls the image of the obverse side, which is displayed in the displaying means at the moment of commencement of a process regarding the card information of the information storing unit, so as to continuously display the same after a fixed period of time elapses after termination of the process.

For this reason, it is possible for a user to easily identify on the basis of which card function the service has been carried out.

Further, in the present invention, an information storing unit (secure device) in which one or a plurality of card applications is or are accommodated is provided with means for storing submission data to be submitted to a set in which the corresponding secure device is held, and it is constructed so that the card application registers data requested to be submitted to the set in the data storing means. Therefore, the card application can submit the data to the set securely only by registering the data in the submission data storing means without any access from the set. On the other hand, even if the set does not know an accessing method and identification method for individual card applications, it is possible to efficiently acquire the data that the respective card applications attempt to submit.

In addition, image data expressing the obverse side of a card is registered, or sound data, light instruction data of light emitting means of a set, and action instruction data of vibration displaying means of the set are registered therein in addition to the image data expressing the obverse side of the card. Therefore, it is possible to appeal to the applications stored in the secure device in various patterns.

Also, in the secure device according to the invention, the storing means is provided with a common interface for card applications. For this reason, the respective card applications are capable of registering data in the storing means at optional timing.

In addition, the storing means of the secure device according to the invention prohibits access, by another card application, to the data that one card application has registered. Therefore, safety of the registered data can be secured.

Also, in the present invention, an information processing unit that holds the secure device is provided with means for receiving a display instruction, means for reading obverse side data registered in the submission data storing means of the secure device, means for displaying the image of the obverse side by using the obverse side data, and controlling means for instructing read-out of the obverse side data from the storing means of the secure device to the data reading-out means when the display instruction receiving means receives a display instruction, and displaying the image of the obverse side by sending the obverse side data, which are read out by the data reading-out means, to the displaying means. Therefore, in the information processing unit, the card functions included in the secure device can be transmitted comprehensively by displaying the obverse sides of cards.

Further, the information processing unit according to the present invention designates obverse side data to be displayed next to the data reading-out means when the display instruction receiving means receives the next display instruction in a prescribed period of time after having received the last display instruction. Therefore, by a user repeating a display instruction operation, a plurality of obverse sides expressing the applications stored in the secure device can be sequentially displayed.

### Brief Description of the Drawings

FIG. 1 is an exemplary view showing a display pattern of an obverse side image in an information storing unit in the first embodiment according to the invention;
FIG. 2 is a block diagram showing a configuration of an information storing unit in the first embodiment according to the invention;
FIG. 3 is a block diagram showing another configuration of the information storing unit in the first embodiment according to the invention;
FIG. 4 is a block diagram showing a configuration of an information processing unit and an information storing unit in the second embodiment according to the invention;
FIG. 5 is a block diagram showing another configuration of an information processing unit and an information storing unit in the second embodiment according to the invention;
FIG. 6 is a block diagram showing a configuration of an information processing unit and an information storing unit, which expresses the obverse side and reverse side in the third embodiment according to the invention;
FIG. 7 is a block diagram showing another configuration of an information processing unit and an information storing unit, which expresses the obverse side and reverse side in the third embodiment according to the invention;
FIG. 8 is a block diagram showing a configuration of an information processing unit and an information storing unit, which separately expresses the obverse side and reverse side in the third embodiment according to the invention;
FIG. 9 is a block diagram showing another configuration of an information processing unit and an information storing unit, which separately expresses the obverse side and reverse side in the third embodiment according to the invention;
FIG. 10 is a block diagram showing a configuration of an information processing unit and an information storing unit, which comprehensively displays card functions in the fourth embodiment according to the invention;
FIG. 11 is a block diagram showing a configuration of an information processing unit and an information storing unit, which carries out a two-stage display in the fourth embodiment according to the invention;
FIG. 12 is a block diagram showing a configuration of an information processing unit and an information storing unit, which quickly displays an obverse side image in the fifth embodiment according to the invention;
FIG. 13 is a block diagram showing another configuration of an information processing unit and an information storing unit, which quickly displays an obverse side image in the fifth embodiment according to the invention;
FIG. 14 is a block diagram showing a configuration of an information processing unit and an information storing unit, which expresses an obverse side image in interlock with the first action in the sixth embodiment according to the invention;
FIG. 15 is a block diagram showing a configuration of an information processing unit and an information storing unit, which expresses an obverse side image in interlock with the second action in the sixth embodiment according to the invention;
FIG. 16 is a block diagram showing a configuration of an information processing unit and an information storing unit, which expresses an obverse side image in interlock with the third action in the sixth embodiment according to the invention;
FIG. 17 is a block diagram showing a configuration of an information processing unit and an information storing unit, which expresses an obverse side image in interlock with the fourth action in the sixth embodiment according to the invention;
FIG. 18 is a block diagram showing a configuration of an information processing unit and an information storing unit in the seventh embodiment according to the invention;
FIG. 19 is an exemplary view showing changeover of display of the obverse side image in a mobile terminal in the eighth embodiment according to the invention;
FIG. 20 is an exemplary view showing a pattern of using card functions of the secure device by using the mobile terminal according to the eighth embodiment of the invention;
FIG. 21 is a block diagram showing a configuration of the mobile terminal and secure device in the eighth embodiment according to the invention;
FIG. 22 is a block diagram showing another configuration of a secure device in the eighth embodiment according to the invention;
FIG. 23 is a block diagram showing another configuration of a mobile terminal in the eighth embodiment according to the invention;
FIG. 24 is a block diagram showing a state where a secure device in the eighth embodiment according to the invention carries out contactless communications with a peripheral reader/writer;
FIG. 25 is a block diagram showing a configuration of a mobile terminal that has lock application designating means in the eighth embodiment according to the invention;
FIG. 26 is a block diagram showing a configuration of a mobile terminal in the ninth embodiment according to the invention;
FIG. 27 is a block diagram showing a configuration of a mobile communications terminal and a multi-application IC card in the tenth embodiment according to the invention;

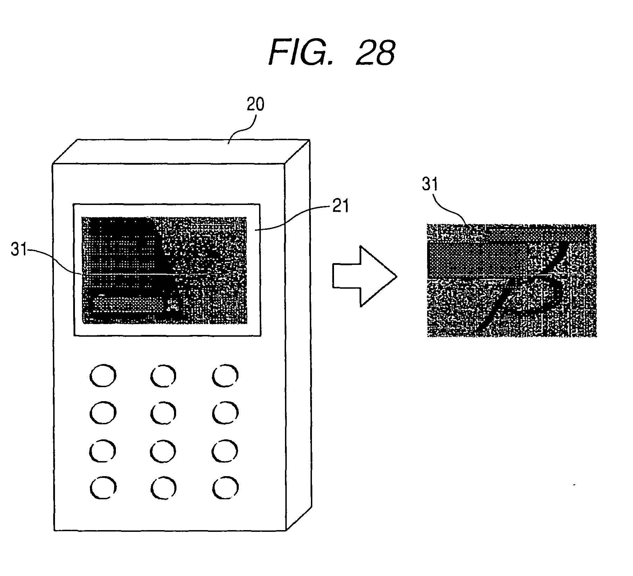

FIG. 28 is an exemplary view showing an obverse side display state by a mobile communications terminal in the tenth embodiment according to the invention;
FIG. 29 is a view showing a data structure in a write area of a multi-application IC card in the embodiments according to the invention;
FIG. 30A through FIG. 30C are views showing formats of stored information managing files in the tenth embodiment according to the invention;
FIG. 31 is view showing a data structure of a write area managing table in the tenth embodiment according to the invention;
FIG. 32 is a view showing a management flow of information stored in a write area of a multi-application IC card in the tenth embodiment of the invention;
FIG. 33 is a diagram showing a sequence subjected to a display instruction of a mobile communications terminal and a multi-application IC card in the tenth embodiment according to the invention;
FIG. 34 is a flow diagram showing a display object determining procedure of a mobile communications terminal in the tenth embodiment according to the invention;

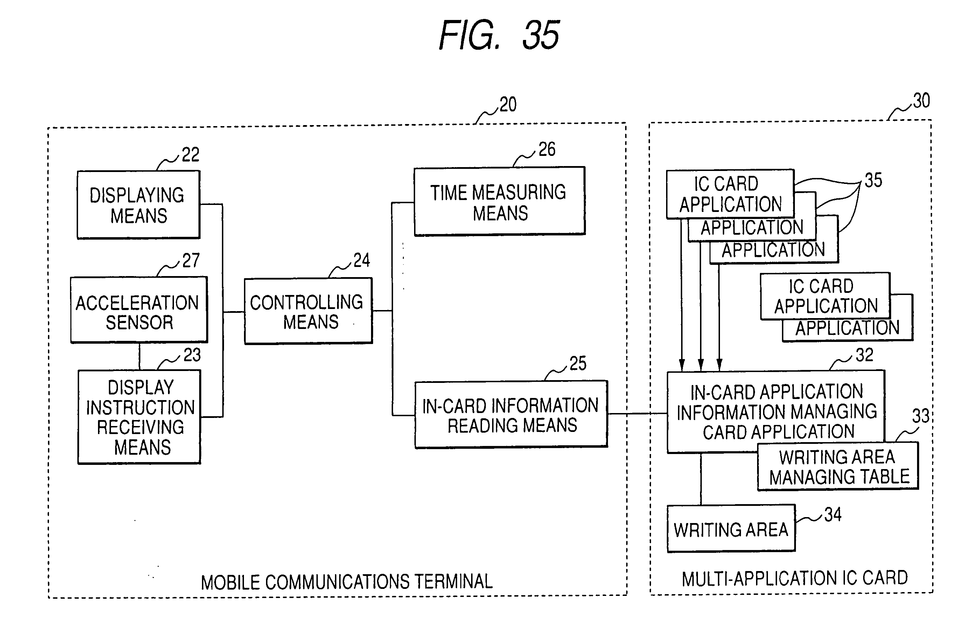

FIG. 35 is a block diagram showing a configuration having an acceleration sensor of a mobile communications terminal in the embodiments according to the invention; and
FIG. 36 is a view describing a card menu of a related art multi-application IC card.

### Detailed Description of the Preferred Embodiments

### (Embodiment 1)

An information storing unit (hereinafter called a "secure device") according to Embodiment 1 of the invention holds obverse side image data of individual cards corresponding to respective card functions incorporated therein, and at the same time, is provided with means for displaying the obverse side image. For example, if a user swings the secure device laterally, the obverse side images are sequentially displayed in the displaying means, and the user looks at the obverse side images and can know the types of card functions incorporated in the secure device.

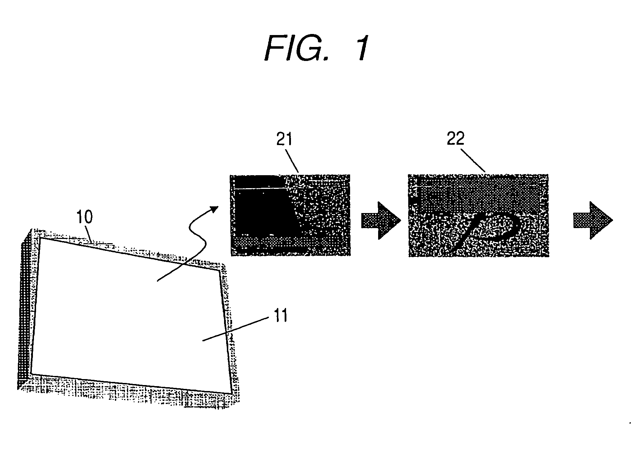

FIG. 1 shows an exemplary of a state where obverse sides 21 and 22 are sequentially displayed in the display screen 11 of the secure device 10 when the secure device 10 is laterally swung.

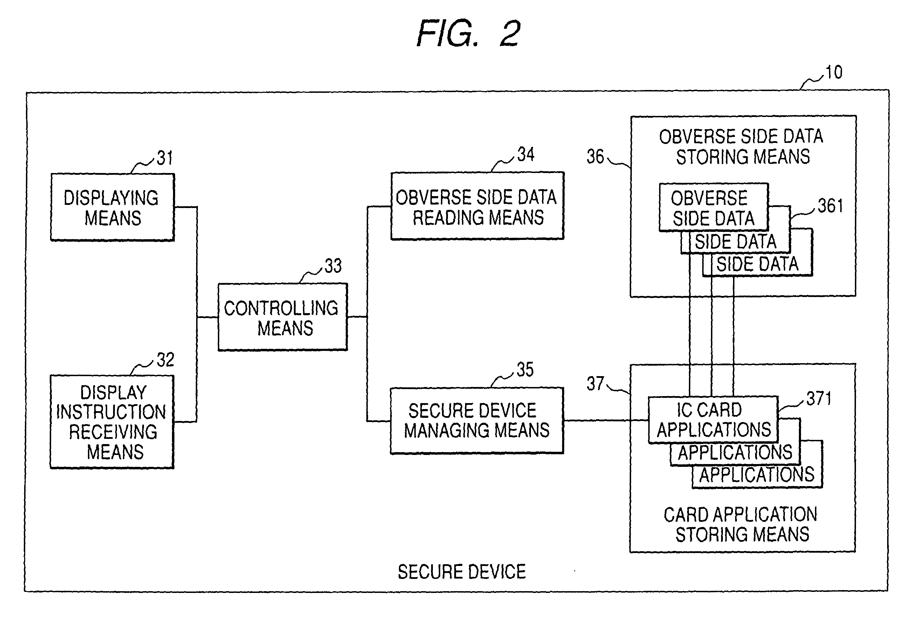

The secure device 10 is provided, as shown in FIG. 2, with card application storing means 37, secured in a confidential area, in which card applications (hereinafter called "IC card applications") 371 for executing card functions are stored, obverse side data storing means 36, secured in the confidential area, in which data of obverse side images (hereinafter called "obverse side data") 361 of individual cards corresponding to respective card functions executed by the IC card applications 371, secure device managing means 35 for managing access to the confidential area; display instruction receiving means 32 for receiving a display instruction of the obverse side images, displaying means 31 for displaying the obverse side images, obverse side data reading means 34 for reading out the obverse side data 361, and controlling means 33 for controlling an obverse side display action.

Further, the secure device 10 is internally provided with a power source for displaying the obverse side images. However, illustration thereof is omitted here. Power supply is described in detail with respect to Embodiment 7.

Also, the secure device managing means 35 permits an access to the confidential area with a condition of success in identification. For example, if the secure device 10 in which a cash card is displayed in the displaying means 31 is "exposed" to a POS terminal, the IC card application 371 for executing a card function of the cash card executes a settlement process in compliance with a command coming from the POS terminal by contactless communications. However, prior to the execution thereof, the IC card application 371 carries out mutual identification with the POS terminal, and the secure device managing means 35 confirms that the terminal has been identified, and hands the command to the IC card application 371. In addition, in view of privacy protection, a holder of a card inputs a PIN (Personal Identification Number) by using a button or reader/writer attached to the card prior to operating a display instruction of the obverse side image and identification of the secure device 10. The secure device managing means 35 permits read-out of the obverse side data under a condition of success in the identification. Or, in view of protection for unjust rewriting of the obverse side data, identification is carried out when writing for setting the defaults of the obverse side data. However, identification may not be required for reading-out.

The cardholder who inputted a PIN instructs display of the obverse side image by swinging the secure device 10 (or operating the button). The display instruction receiving means 32 that detected the display instruction transmits the display instruction of the obverse side image to the controlling means 33, and the controlling means 33 gives the obverse side data reading means 34 an instruction for reading out the obverse side data. The obverse side data reading means 34 makes a request of reading the first obverse side data 361 to the IC card application 371, which knows the position of storage of the obverse side data, through the secure device managing means 35 in order to read out the first obverse side data 361. The secure device managing means 35 transmits a request of the obverse side data reading means 34 to the IC card application 371 where authentic cardholder identification is successful by the PIN, where the obverse side data 361 are read out.

The controlling means 33 transmits the read-out obverse side data to the displaying means 31, and the displaying means 31 displays the obverse side image based on the obverse side data.

If the cardholder further swings the secure device 10, the obverse side data reading means 34 reads out the second obverse side data 361 by the procedure similar thereto, and the second obverse side image is displayed in the displaying means 31. Thus, whenever the cardholder swings the secure device 10, the obverse side data 361 of the obverse side data storing means 36 are read out one after another, and the obverse side image is displayed in the displaying means 31.

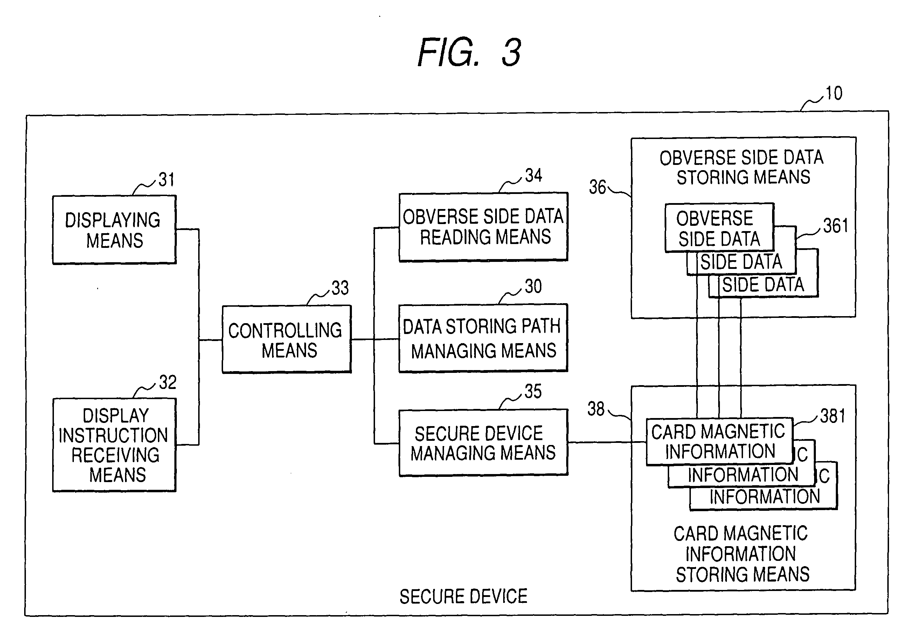

Also, FIG. 3 shows a configuration of the secure device 10 that holds two files related to each other, one of which is a file of a card magnetic information 381 that stores data held by individual cards, for example, information (card magnetic information, etc.) corresponding to the magnetic data (cardholder's name, validity period, credit number, etc.) in a case of a magnetic card, and the other of which is a file of the obverse side data 361. The file structure of the secure device 10 has a DF (Dedicated File) established in the unit of card applications, and an EF (Elementary File) established in the subordinates thereof, and the card magnetic information 381 and obverse side data 361 are stored as the EF. It is possible to make access to the respective EFs through paths from the DF.

Further, the secure device 10 has data storing path managing means 30 for managing paths to the respective obverse side data 361.

In the secure device 10, if the cardholder who inputted a PIN instructs display of the obverse side image, the display instruction receiving means 32 transmits it to the controlling means 33, and the controlling means 33 instructs the obverse side data reading means 34 to read out the obverse side data.

The obverse side data reading means 34 acquires a path to the first obverse side data 361, which is managed by the data storing path managing means 30, and makes a request of reading out the first obverse side data 361 to the secure device managing means 35 by showing the same. The secure device managing means 35 reads out the designated obverse side data 361 from the obverse side data storing means 36 where cardholder identification is successful by the PIN. The controlling means 33 transmits the read-out obverse side data to the displaying means 31 and the displaying means 31 displays the obverse side image on the basis of the obverse side data.

Thus, whenever a cardholder swings the secure device 10 (or operates the button), the obverse side data 361 of the obverse side data storing means 36 are read out one after another, and the obverse side image thereof is displayed in the displaying means 31.

Therefore, the cardholder can intuitively grasp the card function of the secure device 10 from the obverse side image displayed in the displaying means 31.

Also, it can be detected by using a gyroscope, an acceleration sensor, etc., which are described in the above-described non-patent document 1 whether or not the secure device 10 is swung. In addition, it is possible to regulate the direction of the secure device when updating the obverse side display, by adequately setting the direction of detection.

Furthermore, although a description was given herein of an action of swinging the secure device, the obverse side may be displayed or updated in response to a cardholder's action or operation other than the above, for example, tapping the secure device with a finger tip or touching the display screen therewith.

### (Embodiment 2)

In Embodiment 2 according to the invention, a description is given of a configuration in which obverse side images of the card functions internally incorporated in a secure device are displayed by operating a mobile terminal to which the secure device is attached.

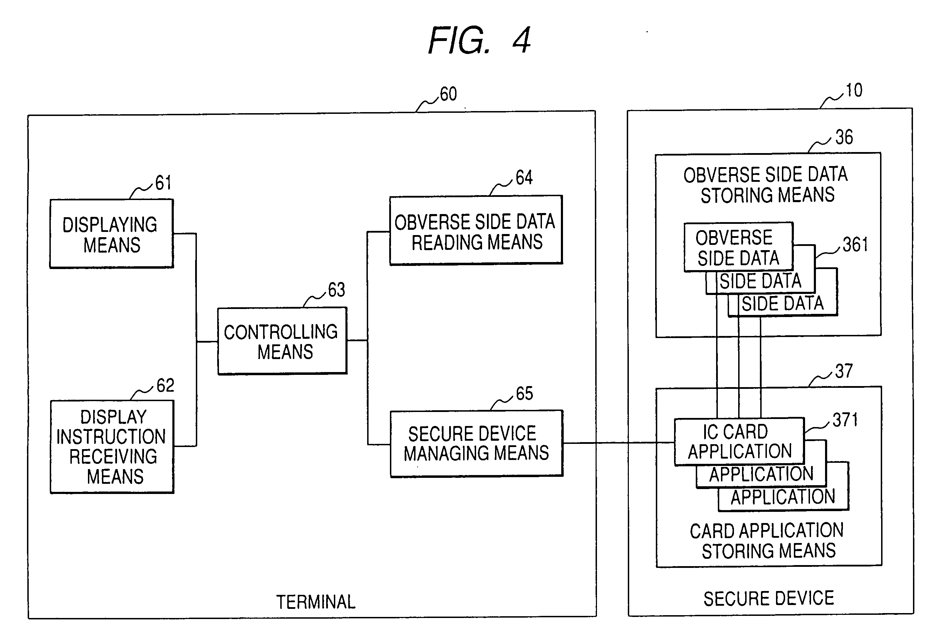

The mobile terminal is a mobile telephone, PDA, PHS, etc. As shown in FIG. 4, the terminal 60 includes display instruction receiving means 62 for receiving a display instruction of an obverse side image, displaying means 61 for displaying the obverse side images, secure device managing means 35 for managing access to the secure device 10, obverse side data reading means 64 for reading out obverse side data 361 from the secure device 10, and controlling means 62 for controlling an obverse side display action. The secure device 10 illustrated herein is of such a type in which an IC card application 371 manages a location of obverse side data, which includes card application storing means 37 for storing IC card applications 371 and obverse side data storing means 36 for storing obverse side data 361.

The mobile terminal 60 carries out contact communications with the secure device 10 and supplies power necessary for the secure device 10.

A holder of the secure device 10 instructs display of obverse side images by swinging the mobile terminal 60 or operating keys of the mobile terminal 60 after inputting a PIN by operating keys of the mobile terminal 60. The display instruction receiving means 62 that detected the instruction transmits a display instruction of the obverse side images to the controlling means 63, and the controlling means 63 gives the obverse side data reading means 64 an instruction of reading out obverse side data. The obverse side data reading means 64 transmits a command to the secure device 10 through the secure device managing means 65 in order to read out the first obverse side data 361, and makes a request of reading out the first obverse side data 361 to the IC card application 371 that knows the storage position of the obverse side data. The secure device managing means 65 transmits the command of the obverse side data reading means 34 to the IC card application 371 where the holder identification is successful by the PIN, wherein the obverse side data 361 are read out from the secure device 10.

The controlling means 63 transmits the read-out obverse side data to the displaying means 61, and the obverse side image is displayed in the displaying means 61 of the mobile terminal 60.

Thus, by a holder repeating a display instruction of the obverse side images, the obverse side images corresponding to the card functions internally incorporated in the secure device 10 are displayed on the screen of the mobile terminal 60 one after another.

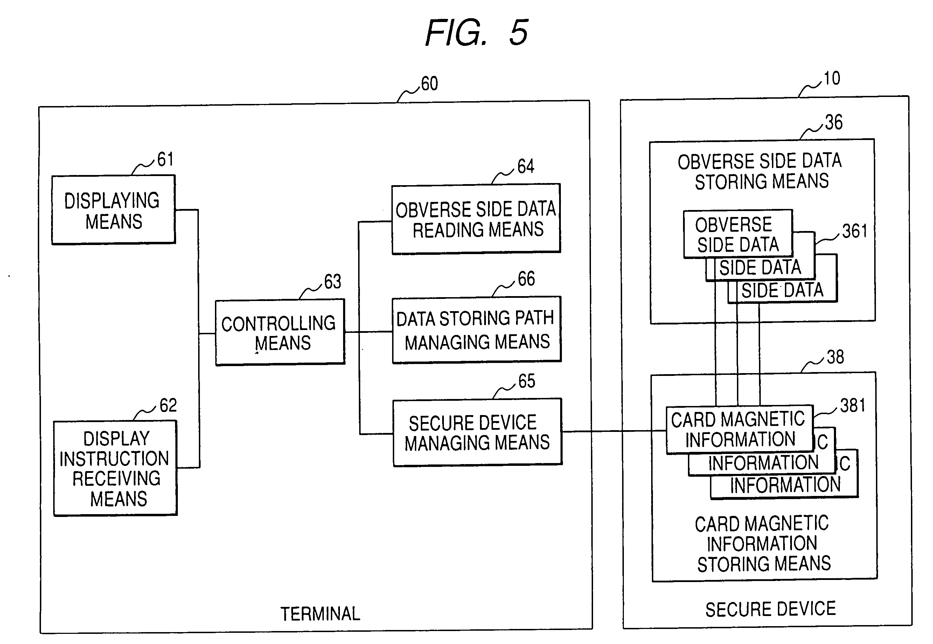

Also, FIG. 5 shows a configuration of the secure device 10, in which card magnetic information 381 and obverse side data 361 are stored in accordance with the DF and EF file structures, and a mobile terminal 60 in which the secure device 10 is mounted. The mobile terminal 60 includes data storing path managing means 66 for managing paths to respective obverse side data 361. The data storing path managing means 66 makes access to the secure device 10 through the secure device managing means 65 when the secure device 10 is mounted, and acquires path information of all of the obverse side data 361 and stores the same therein.

In the mobile terminal 60, the obverse side data reading means 64 that received an instruction of reading out obverse side data acquires a path to the obverse side data 361 managed by the data storing path managing means 66 and makes a request of reading out the obverse side data 361 to the secure device managing means 65 by showing the same. The secure device managing means 65 reads out the designated obverse side data 361 through the path where the holder identification is successful by the PIN.

Other actions are the same as those in the case of FIG. 4.

Thus, the obverse side images of the card function stored in the secure device 10 are sequentially displayed on the screen of the mobile terminal 60 in response to a display instruction of the holder. Therefore, the holder can intuitively interpret the card function of the secure device 10 on the basis of the display.

In addition, a description was given of the case where the terminal is a mobile terminal. However, the terminal may be an information processing terminal such as a personal computer, etc. Also, it may be a POS terminal or credit terminal, which gives an instruction of settlement processing to the secure device. However, in these cases, the display instruction is carried out by operating keys of the terminal.

### (Embodiment 3)

In Embodiment 3 according to the invention, a description is given of a configuration in which card functions internally incorporated in the secure device are displayed by obverse side images or reverse side images of individual cards.

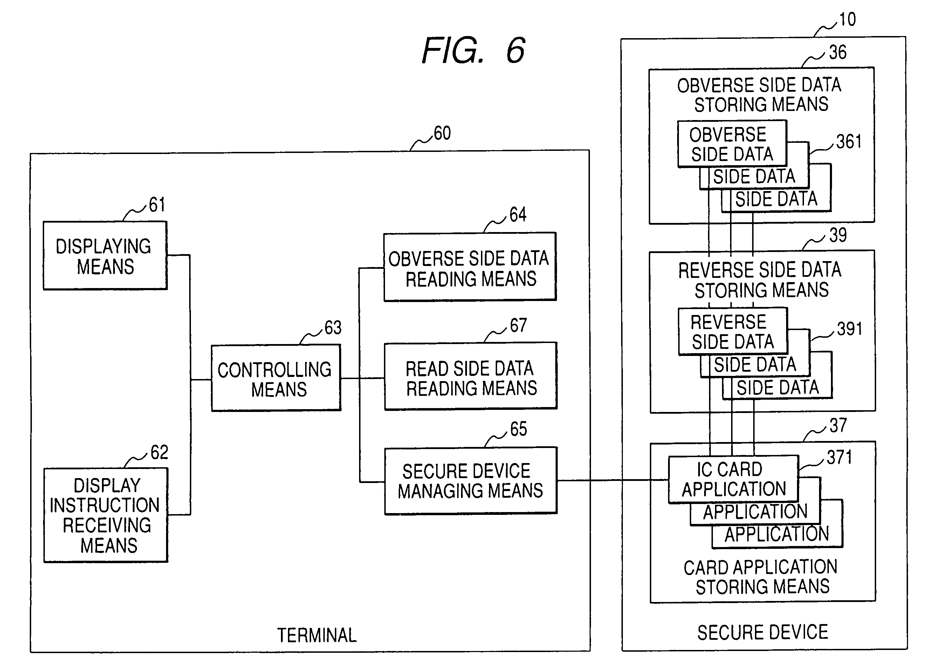

As shown in FIG. 6, the secure device 10 includes obverse side data storing means 36 in which obverse side data 361 are stored, and reverse side data storing means 39 in which reverse side data 391 are stored. The IC card application 371 manages locations of the obverse side data 361 and reverse side data 391 of the corresponding card function. On the other hand, the terminal 60 includes reverse side data reading means 67 for reading out the reverse side data 391. Other configurations are the same as that shown in FIG. 4.

The reverse side data 391 stored in the secure device 10 is read out as in the case of the obverse side data 361. The obverse side image and reverse side image are changed over and displayed in the displaying means 61 of the terminal 60. Or, these images are displayed side by side.

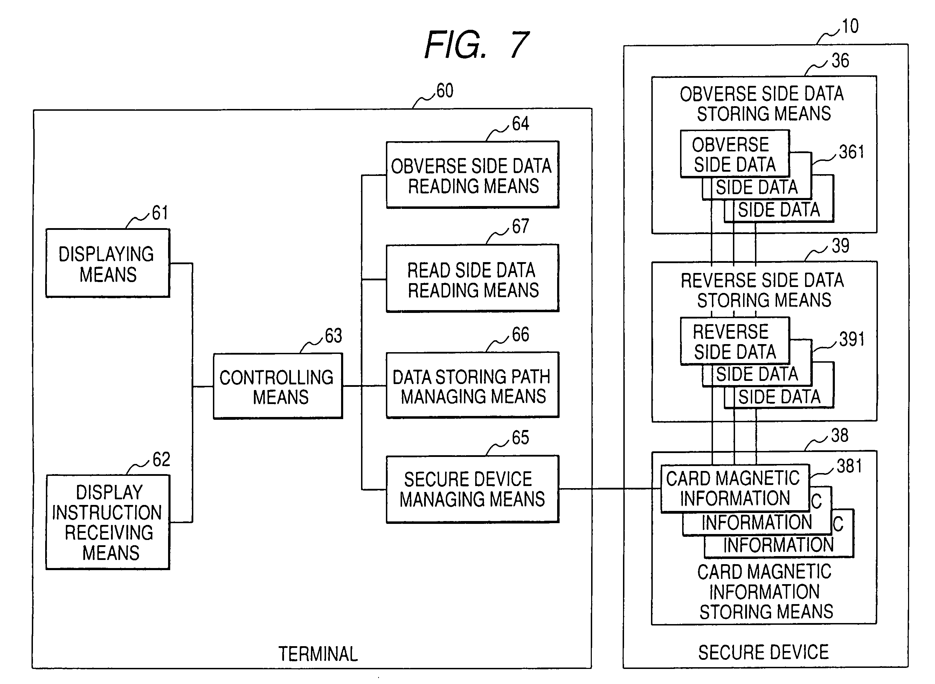

Also, FIG. 7 shows a configuration of the secure device 10 and terminal 60 in the case where the secure device 10 stores the card magnetic information 381 and obverse side data 361 in the DF and EF file structures. The display patterns of the obverse side and reverse side images are similar to those in the case of FIG. 6.

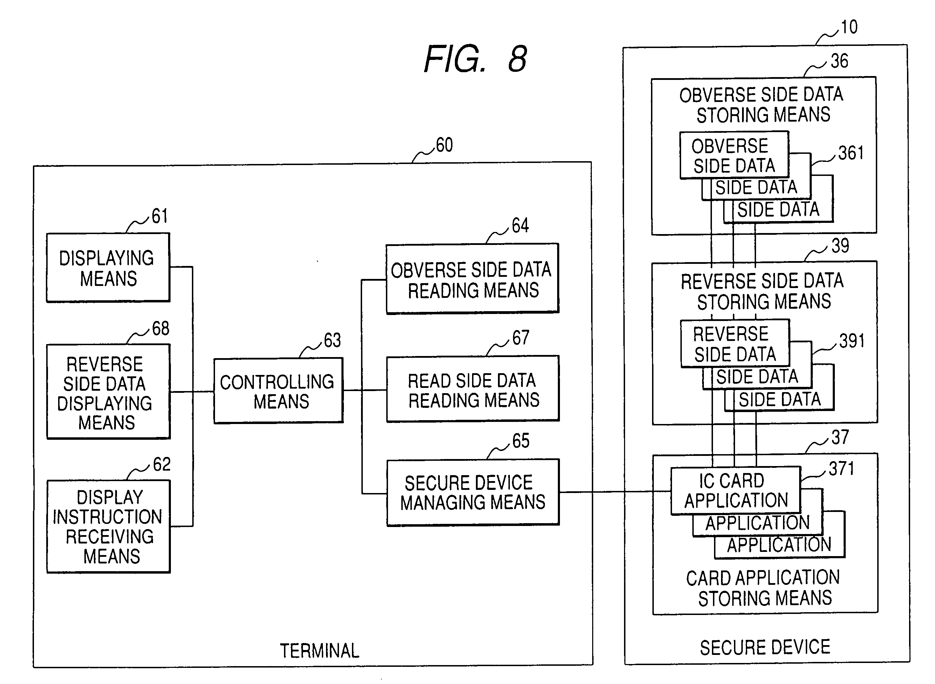

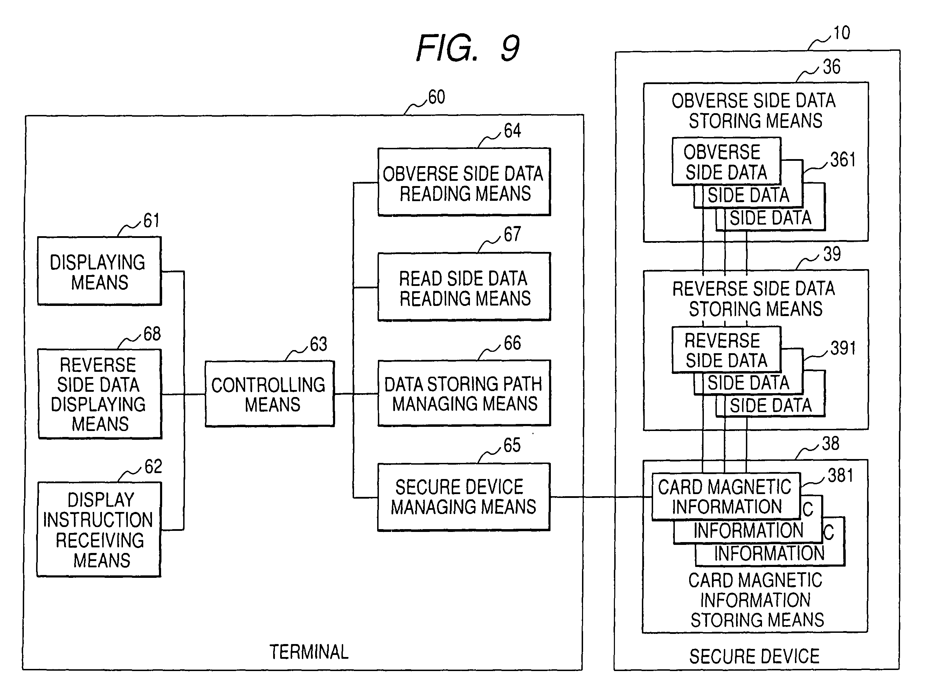

In addition, FIG. 8 and FIG. 9 show a configuration of a terminal 60 having reverse side data displaying means 68 to display the reverse side image separately. In the terminal 60, the obverse side data 361 read out from the secure device 10 are transmitted to the displaying means 61, and the obverse side image is displayed in the displaying means 61. Also, the reverse side data 391 read out from the secure device 10 are transmitted to the reverse side data displaying means 68, and the reverse side image is displayed in the reverse side data displaying means 68.

Thus, by displaying the card function internally incorporated in the secure device 10 in the form of a pair of the obverse and reverse sides of a card, it becomes remarkably clear for which card the secure device 10 can be used.

In addition, here, a description was given of the case where the obverse side image and reverse side image are displayed in the displaying means of a terminal to which the secure device is attached. However, the obverse side image and reverse side image may be changed over and displayed in the displaying means 31 of the secure device in Embodiment 1. Or, displaying means are provided at both sides of the secure device, on one of which the obverse side image may be displayed, and on the other of which the reverse side image may be displayed.

### (Embodiment 4)

In Embodiment 4 according to the invention, a description is given of improvements to make the card functions of the secure device further comprehensible.

### (1) Obverse data processing

Where a secure device is attached to a terminal and an obverse side image is displayed on the display screen of the terminal, the obverse side data are processed with the display resolution power of the terminal taken into consideration, and the obverse side data are enlarged or contracted so that the obverse side data can be displayed on the screen of the terminal in a size as close to the size of the real card as possible.

### (2) Display of deformation image

Where the screen size of the terminal is small or the display resolution power of the terminal is rough, a simplified deformation image such as a brand mark of a servicing enterprise that provides services by means of the card is displayed instead of the obverse side of the card.

### (3) Proposal of sound information

A symbolic sound of a servicing enterprise for providing services by means of the card is reproduced along with displaying of the obverse side image or deformation image.

### (4) Two-stage display

Since the obverse side data are securely kept, and the data volume is large because the obverse side data are image data, it takes much time to read out the data. Therefore, a deformation image such as a brand name the data size of which is small in comparison with the obverse side data and which is not necessary to be securely kept is first displayed, and if there is no display instruction of the next obverse side data in a fixed period of time, the corresponding obverse side data are read out from the secure area and displayed.

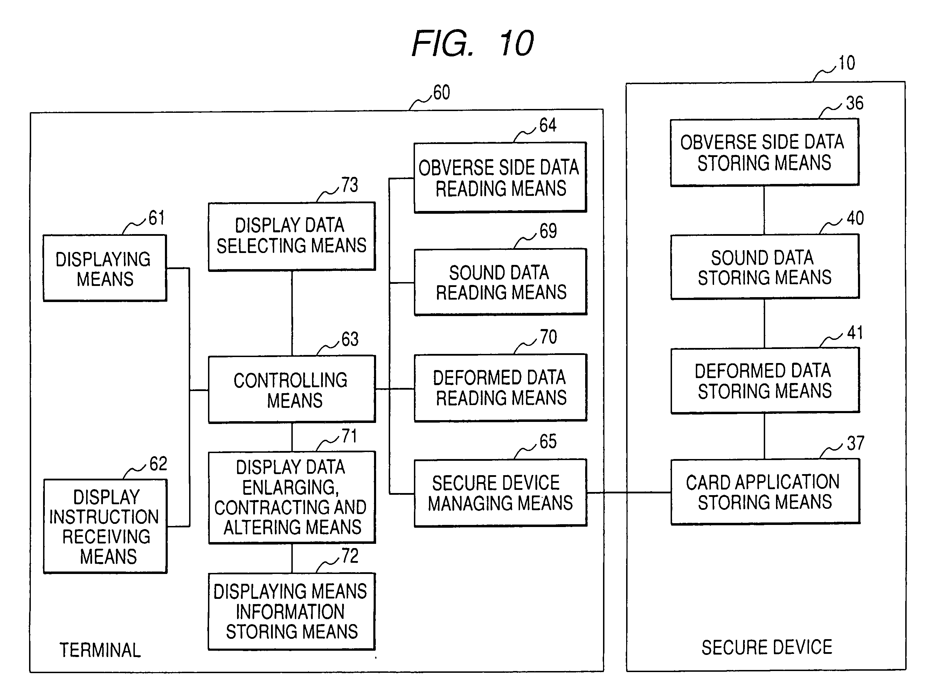

FIG. 10 shows a configuration of a terminal 60, which carries out (1) obverse side data processing, (2) displaying of a deformation image and (3) submission of sound information, and the secure device 10.

The secure device 10 includes card application storing means 37 having a plurality of IC card applications stored therein, obverse side data storing means 36 having obverse side data stored therein, sound data storing means 40 having sound data stored therein, and deformation data storing means 41 having deformation data such as a brand mark, etc., stored therein. The respective IC card applications stored in the card application storing means 37 manage locations of the obverse side data, sound data and deformation data pertaining to its own card function.

On the other hand, the terminal 60 is provided, in addition to the above-described display instruction receiving means 62, with displaying means 61, secure device managing means 35, obverse side data reading means 64, and controlling means 63, with display data selecting means 73 for selecting display data to be displayed in the displaying means 61, displaying means information storing means 72 in which information of an image size and resolution power of the displaying means 61 is stored, display data enlarging, contracting and altering means 71 for processing display data to be displayed in the displaying means 61, sound data reading means 69 for reading out sound data from the secure device 10, and deformation data reading means 70 for reading deformation data from the secure device 10.

In the terminal 60, when the display instruction receiving means 62 receives a display instruction, the controlling means 63 instructs selection of the display data to the display data selecting means 73.

The display data selecting means 73 compares the real size (prescribed value) of the obverse side of a card and the screen size of the displaying means 61 of the terminal 60, where the ratio of the screen size to the prescribed value is smaller than a threshold value and the display resolution power of the displaying means 61 is smaller than a prescribed figure, deformation data and/or sound data are selected as display data, and in other cases, the obverse side data are selected as the display data.

The controlling means 63 instructs reading-out of data selected by the display data selecting means 73 to the obverse side data reading means 64, sound data reading means 69 and deformation data reading means 70. The respective reading means reads out the obverse side data, sound data or deformation data from the secure device 10 through the secure device managing means 65. The procedure of reading out the data from the secure device 10 is the same as that described in Embodiment 2.

The controlling means 63 transmits the read-out deformation data and sound data to the displaying means 61, and the displaying means 61 displays the deformation image and reproduces the sound.

In addition, the controlling means 63 transmits the read-out obverse side data to the display data enlarging, contracting and altering means 71, and the display data enlarging, contracting and altering means 71 thins or interpolates the obverse side data in accordance with the display resolution power of the displaying means 61, and enlarges and contracts the obverse side data so that the obverse side of a card can be displayed on the screen of the displaying means 61 in a size as close to the real size as possible.

The controlling means 63 transmits the processed obverse side data to the displaying means 61, and the displaying means 61 displays the obverse side image using the same.

By such a process, it is possible for a user to intuitively grasp the card function stored in the secure device 10 with the display in the screen and sound even if the screen of the terminal 60 is small.

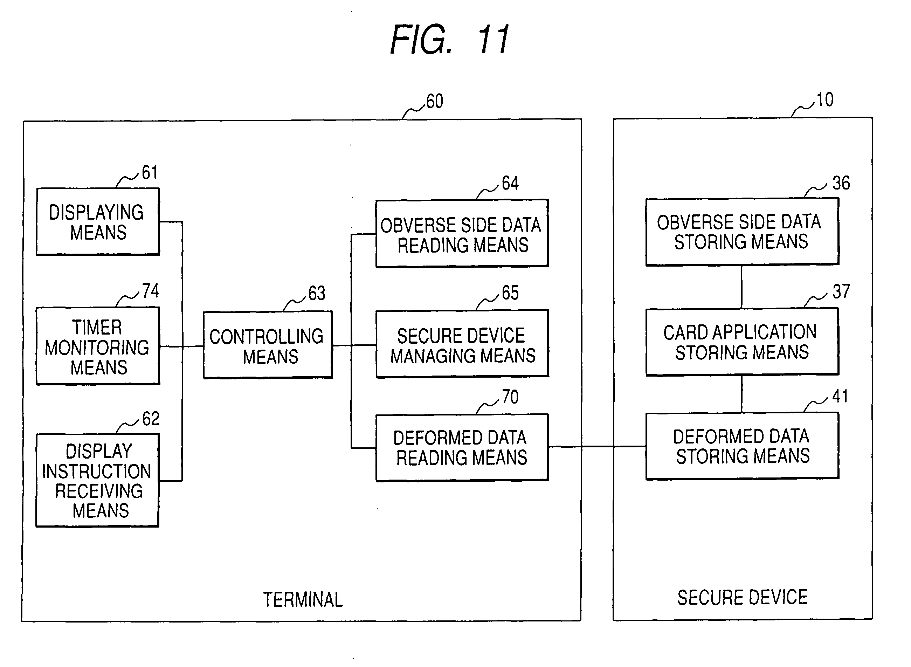

In addition, FIG. 11 shows a configuration of the terminal, which carries out (4) two-stage display, and of the secure device 10. The secure device 10 includes card application storing means 37 and obverse side data storing means 36 in the confidential area, and includes deformation data storing means 41 having deformation data such as a brand mark, etc., stored therein in the non-confidential area.

The terminal 60 includes deformation data reading means 70 for reading out deformation data from the deformation data storing means 41 of the secure device 10 and timer monitoring means 74 for monitoring the display time of the displaying means 61. Other configurations are the same as in FIG. 4.

The secure device 10 stores the obverse side data in the confidential area and securely protects the same, and identification is requisite to read out the obverse side data. On the other hand, deformation data such as a brand mark, etc., are stored in the non-confidential area, and no identification is required to read out the same.

A holder of the secure device 10 swings the mobile terminal 60 or operates the keys of the mobile terminal 60 after inputting the PIN by operating the keys of the terminal 60, and instructs display of the obverse side image. The display instruction receiving means 62 that has detected the same transmits a display instruction to the obverse side image to the controlling means 63, and the controlling means 63 instructs read-out of the deformation data to the deformation data reading means 70 upon receiving the display instruction.

The deformation image reading means 70 reads out the first deformation data from the deformation data storing means 41 of the secure device 10. The controlling means 63 transmits the read-out deformation data to the display means 61, and the displaying means 61 displays the deformation image. The timer monitoring means 74 measures the time elapsed after commencement of display of the deformation image, and when a prescribed period of time elapses, it transmits the time elapsed to the controlling means 63. The controlling means instructs read-out of the obverse side data to the obverse side data reading means 64 where the display instruction receiving means 63 does not receive any next display instruction.

The obverse side data reading means 64 transmits a request command of reading out the obverse side data to the secure device 10 via the secure device managing means 65, and the secure device managing means 65 transmits the command to the card application means 37 of the secure device 10 where the holder identification is successful by the PIN. Thus, the obverse side data pertaining to the deformation data are read out from the secure device 10 and the obverse side image is displayed in the displaying means 61.

By such a process, the deformation image is immediately displayed on the screen of the terminal 60 in response to the display instruction. When a fixed period of time elapses, the display is changed to the obverse side image. Therefore, the deformation image is displayed so as to prevent discontinuance of the display during a period of time until the obverse side image requiring some time to be read out is displayed.

Also, herein, a description was given of the case where the secure device is equipped with IC card applications. However, the same procedure is also applicable even in the case where the secure device is provided with DF and EF file structures.

### (Embodiment 5)

In Embodiment 5 according to the invention, a description is given of improvements to quicken display commencement of obverse side data.

Since a prescribed period of time is required until the obverse side data are read out from the secure device, the obverse side data are duplicated in a normal memory of the terminal or a peripheral memory thereof in advance, and the duplicated data are used for display. However, in this case, since there is a possibility that the obverse side data read out from the secure device is rewritten, the obverse side data are repeatedly duplicated and overwritten.

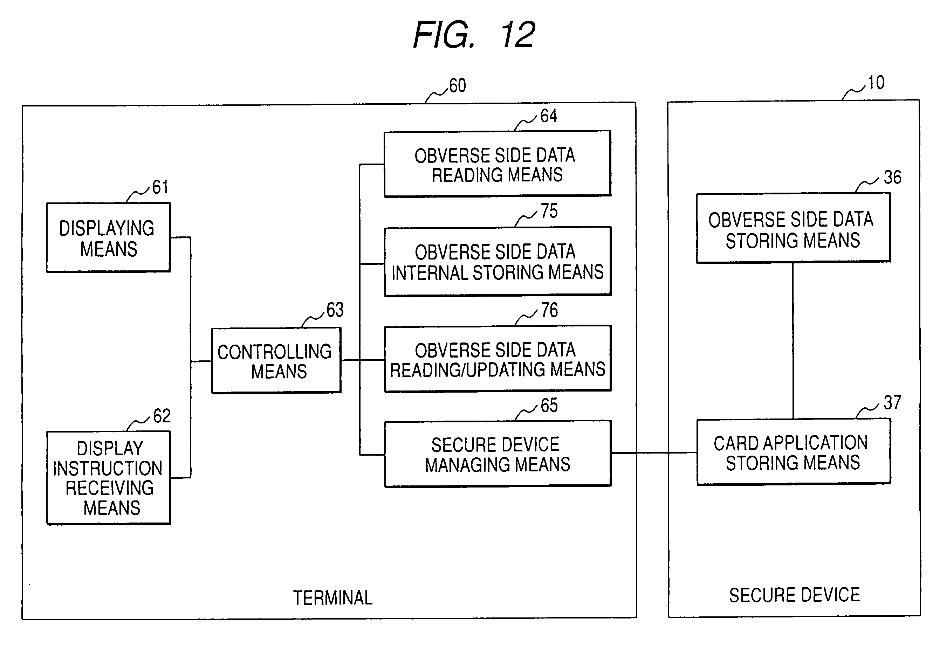

FIG. 12 shows a configuration in the case where obverse side data are duplicated in a normal memory in the terminal.

The terminal 60 includes obverse side data reading/updating means 76 for reading out all of the obverse side data from the secure device 10 and periodically updating the same, and obverse side data internal storing means 75 for storing the obverse side data read out by the obverse side data reading/updating means 76. Other configurations remain unchanged from that in FIG. 4.

When a holder of the secure device 10 inputs a PIN by operating the keys of the terminal 60, the started obverse side data reading/updating means 76 requests the secure device 10 to read out all the obverse side data via the secure device managing means 65. The secure device managing means 65 transmits the request to the secure device 10 where the holder identification is successful by the PIN, and all of the obverse side data transmitted from the secure device 10 in accordance with the request are stored in the obverse side data internal storing means 75. The obverse side data reading/updating means 76 repeats a request of reading out all the obverse side data of the secure device 10 for a fixed period of time, and the obverse side data stored in the obverse side data internal storing means 75 are periodically updated.

When a holder of the secure device 60 instructs display of the obverse side image by swinging the terminal 60 or operating the keys of the terminal 60, the display instruction receiving means 62 that has detected the instruction transmits a display instruction of the obverse side image to the controlling means 63, and the controlling means 63 gives the obverse side data reading means 64 an instruction of reading out the obverse side data. The obverse side data reading means 64 reads out the obverse side data stored in the obverse side data internal storing means 75, the obverse side data are transmitted to the displaying means 61, wherein the obverse side image is displayed.

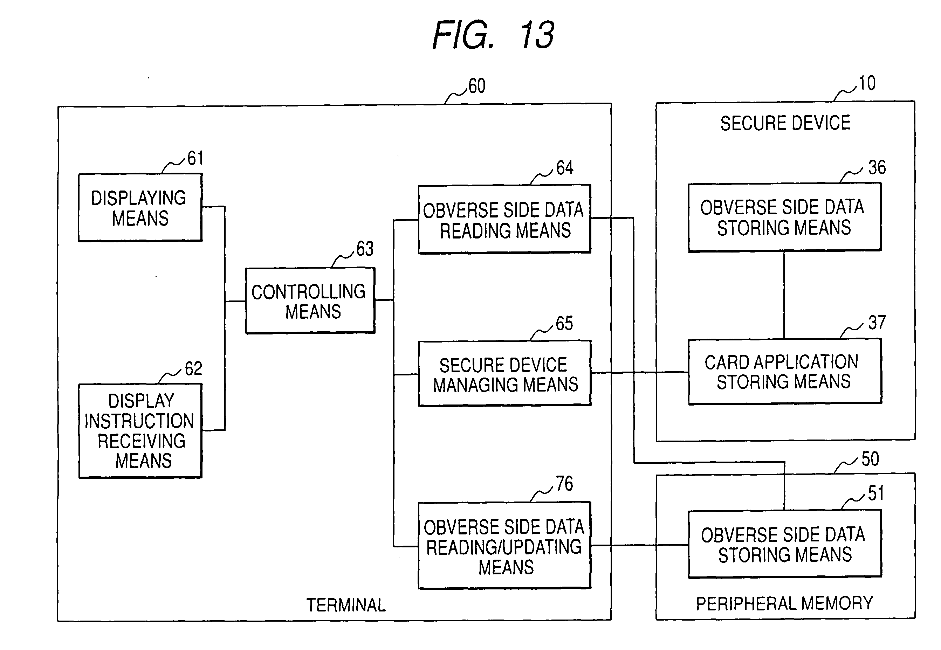

In addition, FIG. 13 shows a case where the obverse side data reading/updating means 76 stores all the obverse side data read out from the secure device 10 in the obverse side data storing means 51 of a peripheral memory 50. Actions of the obverse side data reading/updating means 76 and display action corresponding to the display instruction are the same as those in FIG. 12.

With such a configuration, it is possible to shorten the time required from an action of display instruction to display of the obverse side image.

### (Embodiment 6)

In Embodiment 6 according to the invention, a description is given of improvements to cause the display action of the obverse side data to be interlocked with an action of a user.

For example, it is possible to interlock an action of a user with a display action of the obverse side data as shown below.
(1) Only in the case where a terminal being a mobile telephone is in a standby status, it becomes possible to display the obverse side image and change over the display by a swinging action of the terminal.
(2) If the mobile telephone is swung horizontally, the display of the obverse side image is changed over, and if it is swung vertically, the mobile telephone is returned to a standby status.
(3) If the mobile telephone is swung horizontally while pressing either button or an exclusive button, it becomes possible to display the obverse side image and to change over the display.
(4) If the mobile telephone is swung horizontally, it becomes possible to display the obverse side image and change over the display, and when a fixed period of time elapses, the mobile telephone is returned to the status before displaying the obverse side.

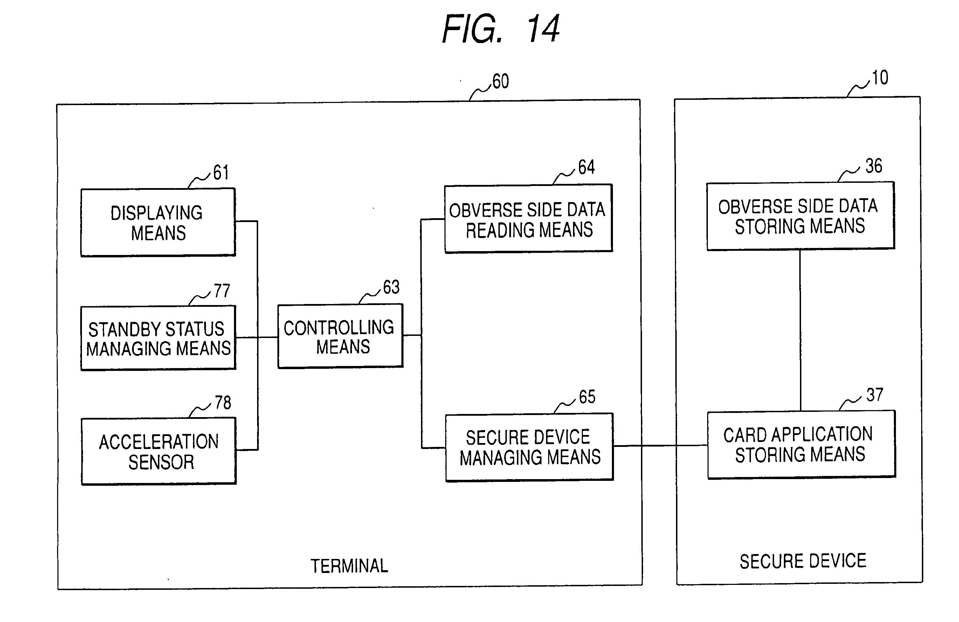

FIG. 14 shows a configuration of a mobile telephone which carries out a display action of (1). The terminal 60 includes standby status managing means 77 for managing the standby status and an acceleration sensor 78 acting as display instruction receiving means. Other configurations remain unchanged from that shown in FIG. 4.

The acceleration sensor 78 detects a swing when the terminal 60 is swung horizontally, and transmits the swing to the controlling means 63. On the other hand, the standby status managing means 77 transmits a standby status of the terminal 60 to the controlling means 63 when the terminal 60 is in a standby status. The controlling means 63 receives a display instruction of the obverse side image when the acceleration sensor 78 detects "horizontal swing" when the terminal 60 is in a standby status, and gives an instruction of reading out the obverse side data to the obverse side data reading means 64. On the other hand, even if the acceleration sensor 78 detects "horizontal swing" when the terminal 60 is not in a standby status, the controlling means 63 disregards the detection.

In addition, when the terminal 60 is in a standby status, the controlling means 63 updates the obverse side image to be displayed, whenever the acceleration sensor 78 detects "horizontal swing." Or, once the acceleration sensor 78 detects "horizontal swing," the controlling means 63 controls reading-out of the obverse side data reading means 64 so that all of the obverse side images are displayed one after another, and when one turn of display of the obverse side images is completed, the controlling means 63 gives the standby status managing means 77 an instruction of returning to the standby status.

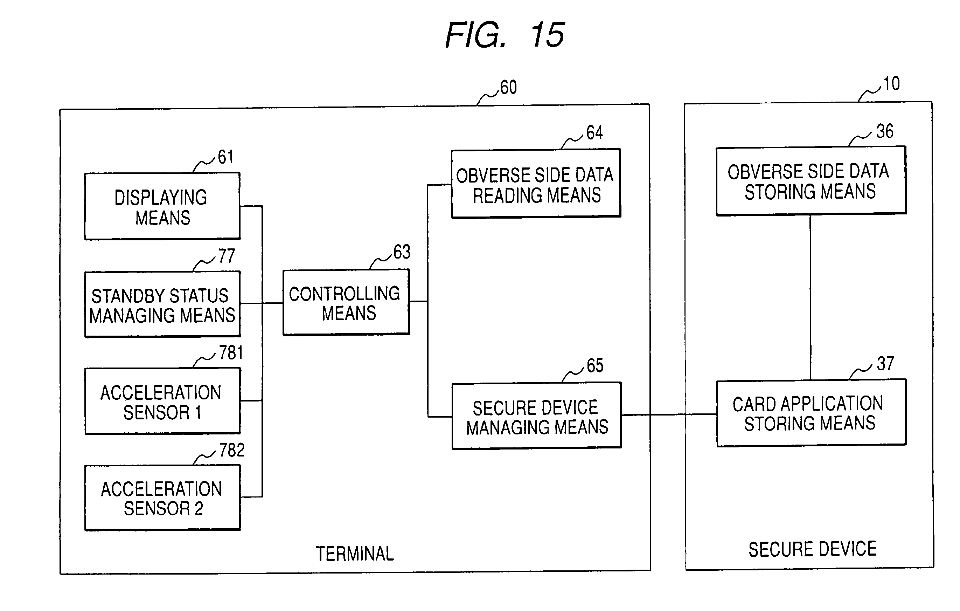

FIG. 15 shows a configuration of a mobile telephone which carries out a display action of (2). The terminal 60 includes the first acceleration sensor 781 for detecting horizontal swing and the second acceleration sensor 782 for detecting vertical swing. Other configurations remain unchanged from that shown in FIG. 14.

The controlling means 63 receives a display instruction of an obverse side image regardless of the status display of the standby status managing means 77 when the first acceleration sensor 781 detects "horizontal swing," and gives the obverse side data reading means 64 an instruction of reading out the obverse side data. On the other hand, when the second acceleration sensor 782 detects "vertical swing," the controlling means 63 gives the standby status managing means 77 an instruction of shifting to a standby status.

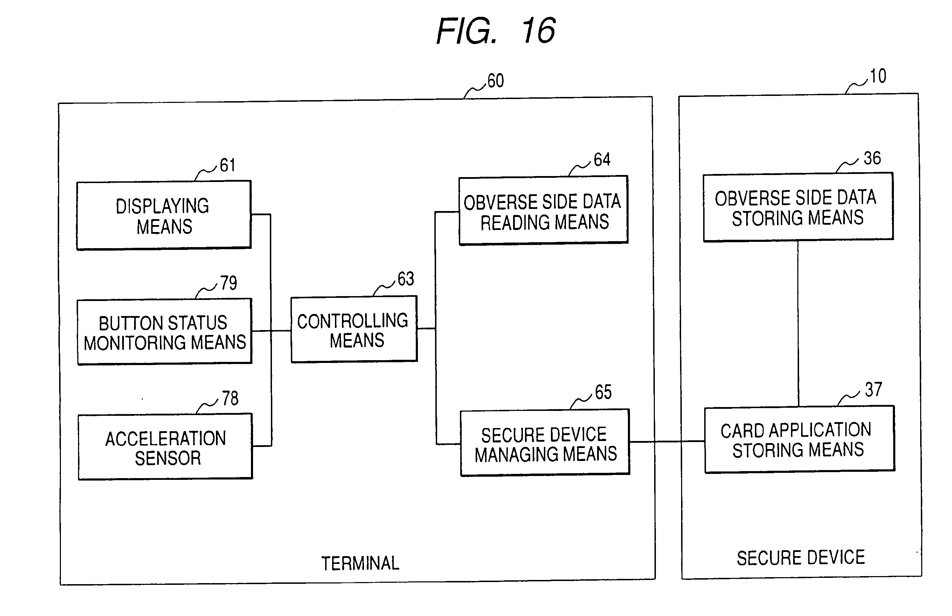

FIG. 16 shows a configuration of a mobile telephone which carries out a display action of (3). The terminal 60 includes button status monitoring means 79 for monitoring pressing of a button. Other configurations remain unchanged from that shown in FIG. 14.

The button status monitoring means 79 transmits pressing of the button of the terminal 60 to the controlling means 63 when the button thereof is pressed. Where the acceleration sensor 78 detects "horizontal swing" when the button is pressed, the controlling means 63 receives the detection as a display instruction of obverse side images, and gives the obverse side data reading means 64 an instruction of reading out the obverse side data. On the other hand, the controlling means 63 disregards the detection even if the acceleration sensor 78 detects "horizontal detection" when the button is not pressed.

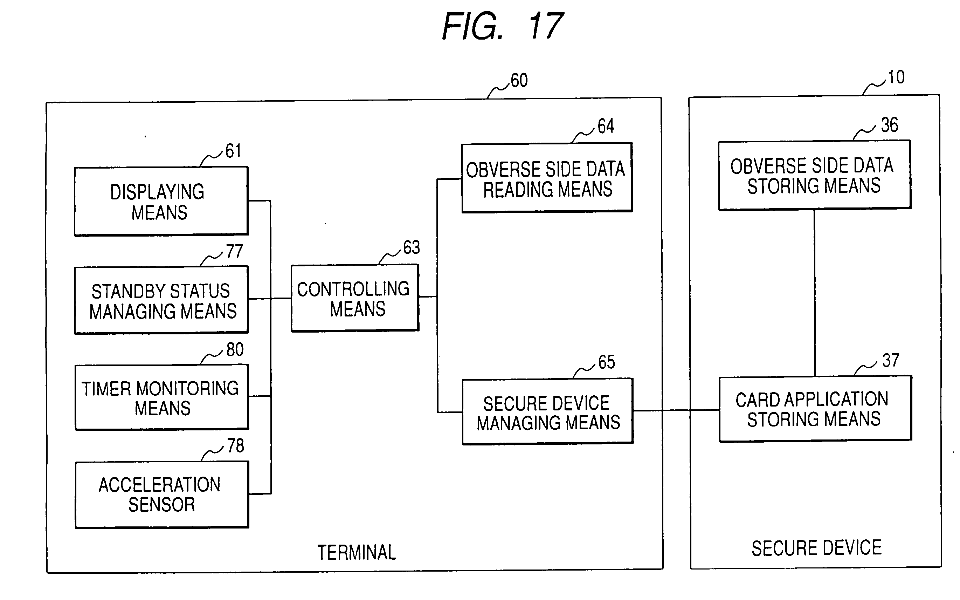

FIG. 17 shows a configuration of a mobile telephone which carries out a display action of (4). The terminal 60 includes timer monitoring means 80 for monitoring the elapsed time from the time at which the acceleration sensor 78 detects "horizontal swing." If a fixed period of time elapses, the terminal 60 is returned to its original standby status. Other configurations remain unchanged from that shown in FIG. 14.

When the acceleration sensor 78 detects "horizontal swing," the controlling means 63 receives the detection as a display instruction of the obverse side image regardless of the status display of the standby status monitoring means 77, and gives the obverse side data reading means 64 an instruction of reading out the obverse side data. The timer monitoring means 80 counts the elapsed time from the time at which the acceleration sensor 78 detects "horizontal swing." Where the acceleration sensor 78 detects "horizontal swing" again before a fixed period of time elapses, the timer monitoring means 80 resets the measurement time until then, and re-counts the elapsed time. When the elapsed time reaches a fixed period, the timer monitoring means 80 transmits the time elapsed to the controlling means 63, and the controlling means 63 gives the standby status managing means 77 an instruction of returning to the original status.

Also, here, a description was given of the case where the standby status managing means 77 is returned to its original standby status. However, if the status before displaying the obverse side data is telephone directory display or mail display, it is also possible to return the standby status managing means 77 to a processing screen continued therefrom by an instruction given by the controlling means 63 after a fixed period of time elapses.

Thus, by interlocking an action of a user with a display action of the obverse side data, the user can simply operate display of obverse side data with a single hand.

### (Embodiment 7)

In Embodiment 7 according to the invention, a description is given of improvements of a power-supplying method to the secure device.

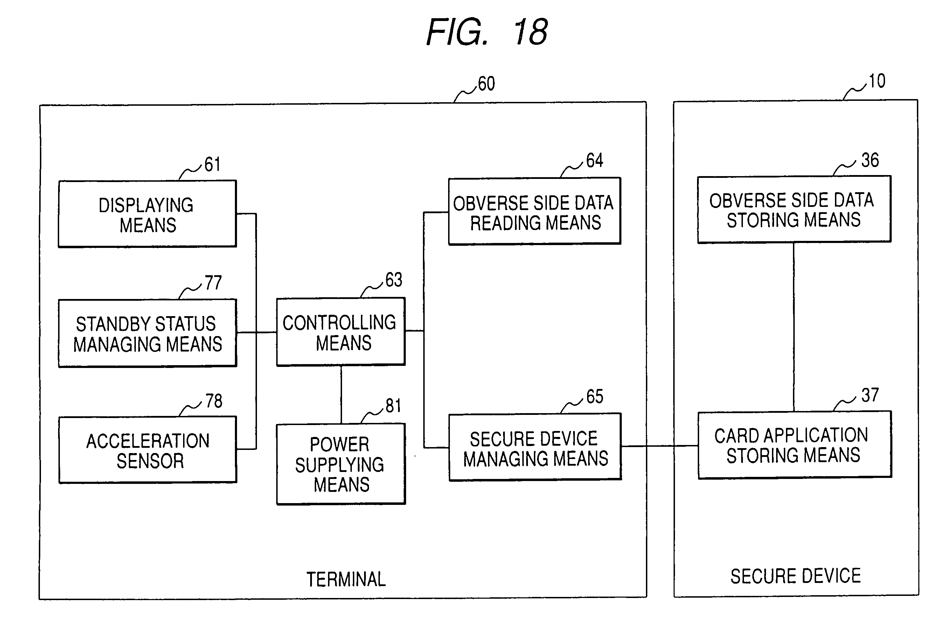

FIG. 18 shows a configuration of a terminal 60 equipped with power supplying means 81 for supplying power to the secure device 10. Other configurations remain unchanged from that shown in FIG. 14.

When the acceleration sensor 78 of the terminal 60 detects an action of a user, it transmits the detection to the controlling means 63. The controlling means 63 gives an instruction to the power supplying means 81, by which power is supplied to the secure device 10. The power supplying means 81 commences power supply to the secure device 10. The controlling means 63 also gives the obverse side data reading means 64 an instruction of reading out the obverse side data.

Thus, power is supplied to the secure device 10 in line with the action of a user. After that, the secure device 10 carries out card processing through contact communications or contactless communications by using the power supply.

Further, since power supply is commenced to the secure device at the moment when an action is made, it becomes possible to save power consumption.

Also, a description was given of the case where power is supplied from the terminal 60 to the secure device 10. However, the technology is also applicable to the case where the secure device itself has a power source.

### (Embodiment 8)

An information processing unit in Embodiment 8 according to the invention is a mobile communications terminal such as a mobile telephone, PHS, etc., in which a secure device is incorporated, wherein accessing the secure device is carried out by contact communications.

On the other hand, the secure device is provided with a plurality of card functions, and has obverse side data corresponding to the respective card functions. Also, the secure device is provided with contact communications means and contactless communications means, and receives instructions from a mobile communications terminal via contact communications means and returns the result of the instructed processing thereto. Further, the secure device receives an instruction from a peripheral reader/writer such as, for example, a ticket examiner, POS terminal, and credit terminal, through non-communications means and carries out a process on the basis of a prescribed card function.

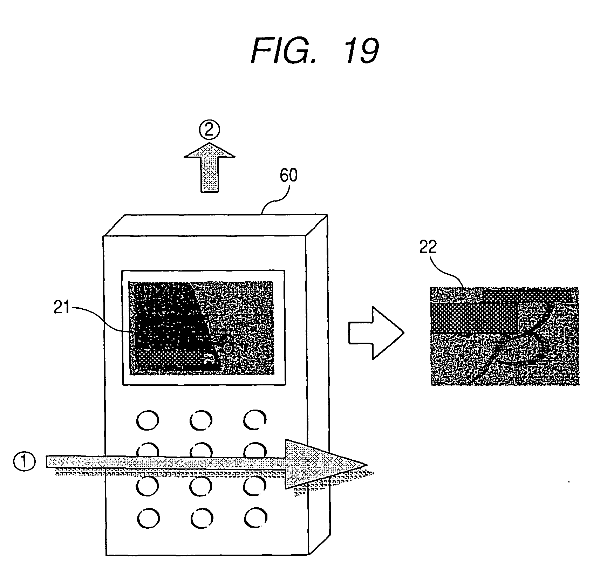

As shown as an exemplary in FIG. 19, if a mobile communications terminal 60 having the secure device mounted therein is swung horizontally (in the direction of the arrow 1), an obverse side image 21 expressing one of the card functions of the secure device is displayed on the display screen of the mobile communications terminal 60, and further if the mobile communications terminal 60 is swung horizontally, the next obverse side image 22 is displayed. Thus, whenever the mobile communications terminal 60 is swung horizontally, obverse side images expressing the card functions of the secure device are sequentially displayed on the display screen of the mobile communications terminal 60. In addition, if the mobile communications terminal 60 is swung vertically (in the direction of the arrow 2), the mobile communications terminal 60 stops displaying the obverse side image and is returned to a standby status of communications.

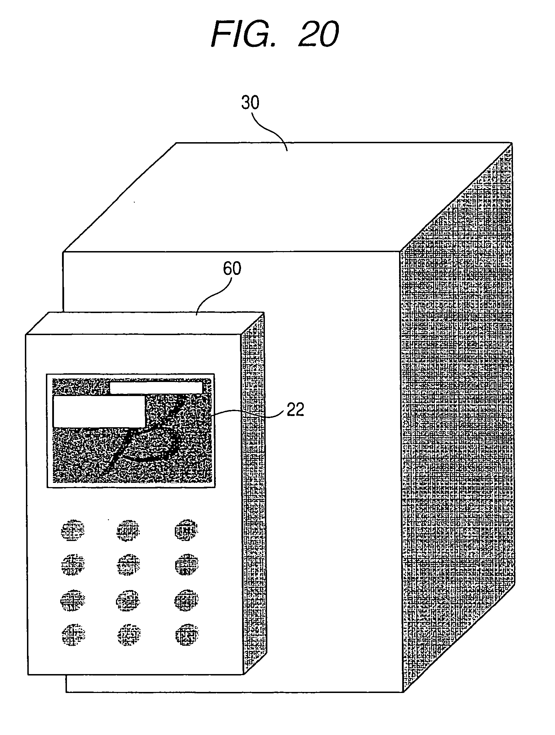

As shown in FIG. 20, a user displays, on the display screen, the obverse side image 22 corresponding to the card function to be used, and approaches the mobile communications terminal 60 to a peripheral reader/writer 30. The secure device attached to the mobile communications terminal 60 reaches a contactless communications area of the peripheral reader/writer 30, commences communications with the peripheral reader/writer 30 via the contactless communications means, and starts processing using the card function of the displayed obverse side image 22.

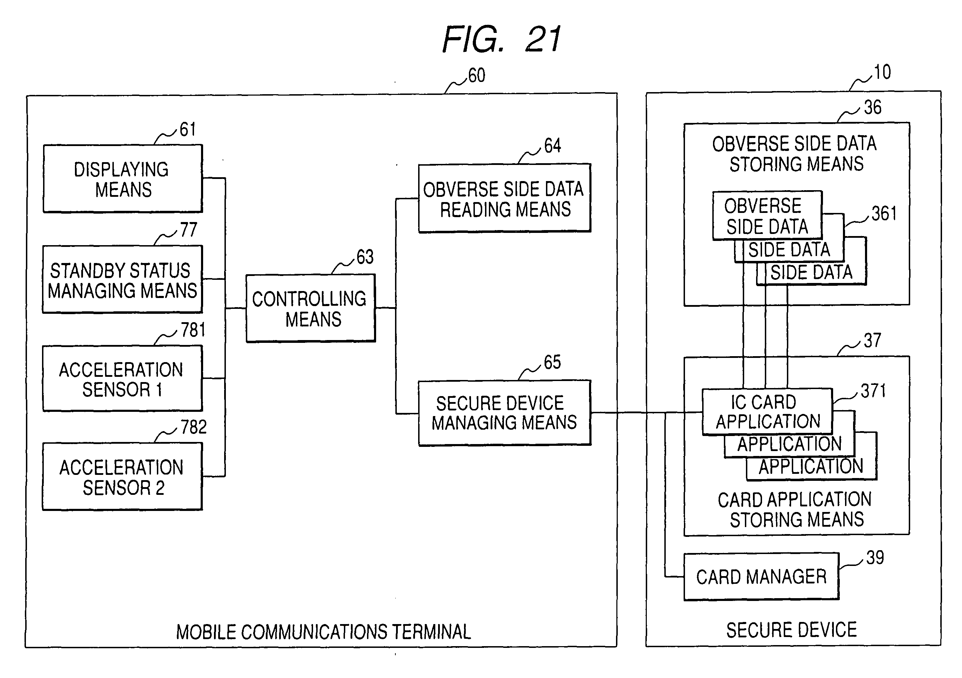

FIG. 21 shows a configuration of the mobile communications terminal 60 and secure device 10. The secure device 10 includes card application storing means 37, provided in the confidential area, in which card applications (hereinafter called "IC card applications") 371 for executing card functions, and obverse side data storing means 36 are stored, provided in the confidential area, in which obverse side data 361 of individual cards corresponding to the respective card functions executed by the IC card applications 371 are stored, and a card manager 39 operating as a common library.

On the other hand, the mobile communications terminal 60 includes the first acceleration sensor 781 for detecting horizontal swing, second acceleration sensor 782 for detecting vertical swing, displaying means 61 for displaying obverse side images, secure device managing means 35 for managing accessing the secure device 10, obverse side data reading means 64 for reading out obverse side data 361 from the secure device 10, controlling means 63 for controlling obverse side display actions, and standby status managing means 77 for managing a standby status of communications of the mobile communications terminal 60.

The secure device managing means 35 requests the card manager 39 of the secure device 10 to identify the PIN (Personal Identification Number) inputted by operating the keys of the mobile communications terminal 60, and carries out a process of mutual identification of the mobile communications terminal 60 and the secure device 10 with respect to the card manager 39.

The user whose PIN is identified instructs to display an obverse side image by horizontally swinging the mobile communications terminal 60. The first acceleration sensor that has detected the "horizontal swing" transmits a display instruction of the obverse side image to the controlling means 63, and the controlling means 63 instructs reading-out of the obverse side data to the obverse side data reading means 64. The obverse side data reading means 64 transmits a command for reading out the first obverse side data 361 to the secure device 10 through the secure device managing means 65, and requests the IC card application 371, which knows a storage location of the obverse side data, to read out the first obverse side data 361. The secure device managing means 65 transmits a command of the obverse side data reading means 34 to the corresponding IC card application 371 after requesting identification of the obverse side data reading means 64, wherein the IC card application 371 reads out the designated obverse side data 361 and transmits the same to the mobile communications terminal 60.

The controlling means 63 transmits the read-out obverse side data to the displaying means 61, and the obverse side image is displayed in the displaying means 61 of the mobile communications terminal 60.

Thus, whenever the user swings the mobile communications terminal 60, obverse side images corresponding to the card functions internally incorporated in the secure device 10 are sequentially read out, and are displayed on the screen of the mobile communications terminal 60. Therefore, the user is able to intuitively grasp the card function of the secure device 10 on the basis of the obverse side data displayed in the displaying means 61.

On the other hand, if the second acceleration sensor 782 detects "vertical swing" of the mobile communications terminal 60, the second acceleration sensor 782 transmits the same to the controlling means 63, wherein the controlling means 63 stops displaying by the displaying means 61 upon receiving the transmission, and instructs the standby status managing means 77 to shift to the standby status.

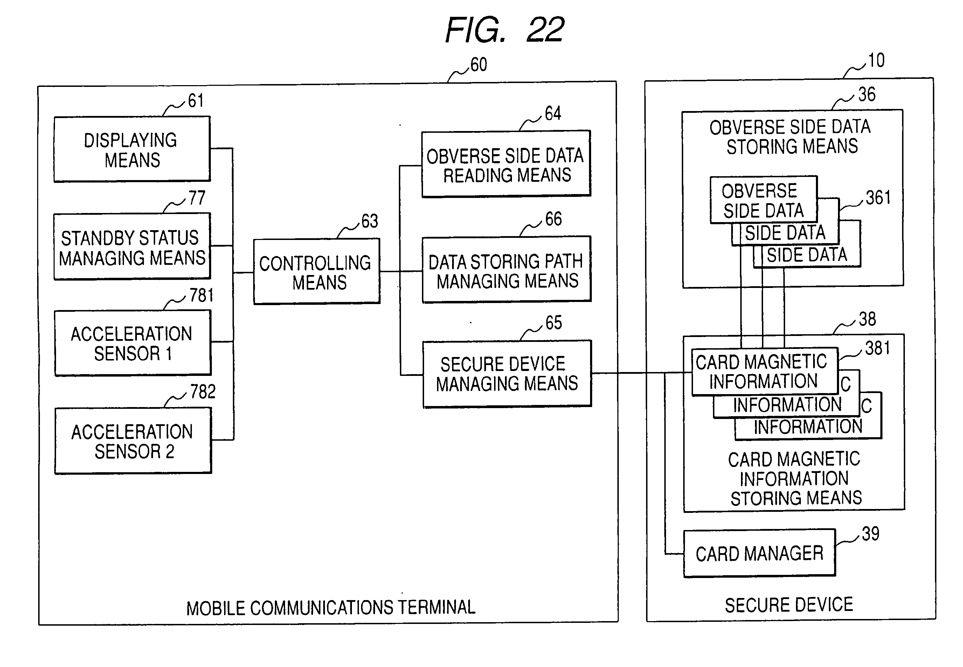

Also, here, a description was given of the secure device 10 of such a type in which respective obverse side data 361 are read out by the IC card applications 371 corresponding thereto. However, as shown in FIG. 22, the secure device 10 may be of such a type in which a file of card magnetic information 381, in which data held by respective cards, for example, in a case of a magnetic card, information (hereinafter called "card magnetic information") corresponding to magnetic data (holder's name, validity, credit number, etc.) are stored, and a file of the obverse side data 361 are related to each other and are held. The file structure of the secure device 10 includes a DF (Dedicated File) established in the unit of a card application and an EF (Elementary File) established in the subordinate thereof, wherein the card magnetic information 381 and obverse side data 361 are stored in the format of EF, and the respective EFs can be accessed along paths from the DF.

In this case, the mobile communications terminal 60 includes data storing path managing means 66 for managing paths to the respective obverse side data 361. The data storing path managing means 66 acquires path information to all of the obverse side data 361 from the secure device 10 for which mutual identification is completed, through the secure device managing means 65, and holds the same.

In addition, the obverse side data reading means 64 that receives a reading-out instruction of the obverse side data from the controlling means 63 acquires a path to the obverse side data 361 managed by the data storing path managing means 66, and reads out prescribed obverse side data 361 from the path through the secure device managing means 65. Other configurations and operations are the same as those in the case shown in FIG. 21.

Herein, a description was given of the case where a display action of obverse side images of the mobile communications terminal 60 is interlocked with a user action of swinging the mobile communications terminal 60. However, the display action can be interlocked with other actions of the user.

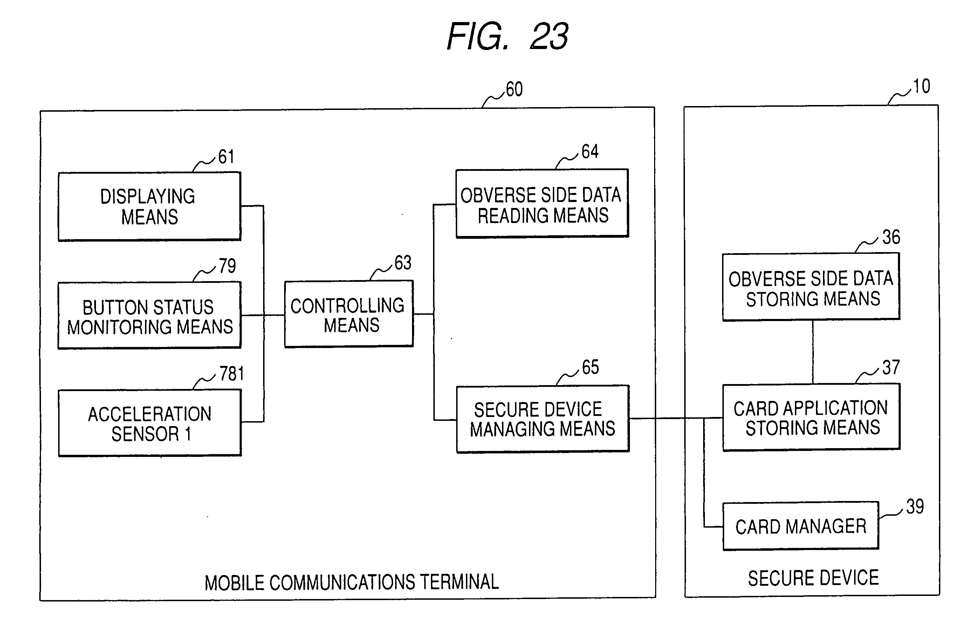

For example, FIG. 23 shows a configuration of a mobile communications terminal 60 in which an obverse side image is displayed by horizontally swinging the mobile communications terminal while pressing any button or an exclusive button. The mobile communications terminal 60 includes button status monitoring means 79 for monitoring pressing of buttons. When a button of the mobile communications terminal 60 is pressed, the button status monitoring means 79 transmits the pressing thereof to the controlling means 63. In a case where the first acceleration sensor 781 detects "horizontal swing," the controlling means 63 receives it as a display instruction of an obverse side image when the button is pressed, and gives the obverse side data reading means 64 an instruction of reading out the obverse side data. On the other hand, even if the first acceleration sensor 781 detects "horizontal swing," the controlling means 63 disregards it when the button is not pressed. By the controlling means 63 carrying out such controlling, it becomes possible to display obverse side images on the display screen of the mobile communications terminal 60 sequentially in interlocked with a user action of horizontally swinging the mobile communications terminal 60 while pressing the button.

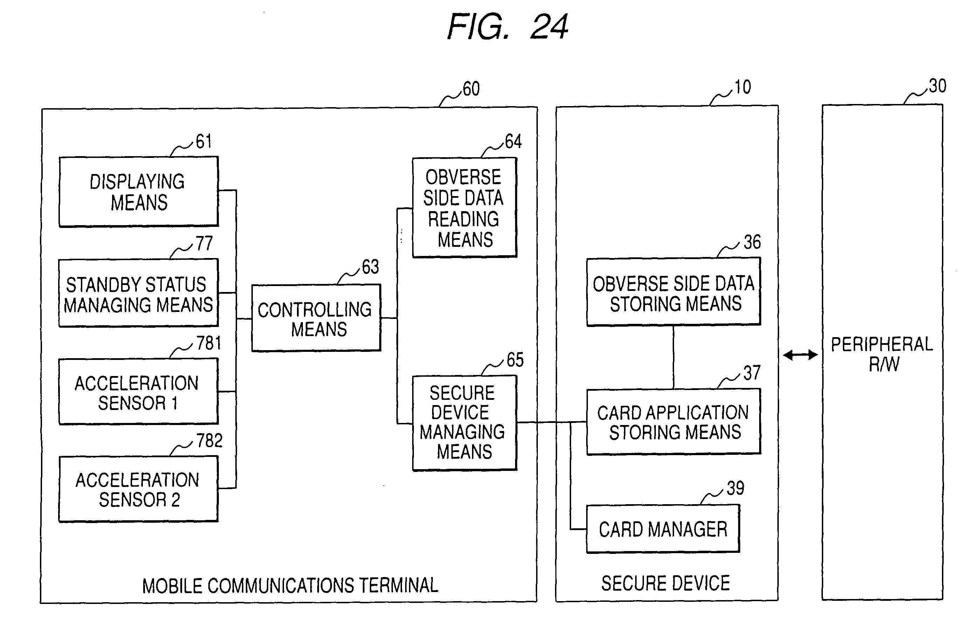

Here, as shown in FIG. 20, if a user displays an obverse side image 22 corresponding to the card function to be used, by a user action, on the display screen of the mobile communications terminal 60, and approaches the mobile communications terminal 60 to a peripheral reader/writer 30 to cause the secure device to execute contactless communications with the peripheral reader/writer 30. FIG. 24 shows the situations. An IC card application of the secure device 10, which corresponds to the obverse side image displayed in the mobile communications terminal 60, executes a process based on the corresponding card function in compliance with a command given from the peripheral reader/writer 30 by the contactless communications.

At this time, it is necessary that IC card applications other than the IC card application corresponding to the displayed obverse side image 22 are hidden from the peripheral reader/writer 30 so that the other IC card applications are not selected by the peripheral reader/writer 30. Usually, an IC card is started by designating the IC card application from the peripheral reader/writer. However, for example, in a scene of executing settlement, where there are a plurality of credit card applications in the IC card, and the peripheral reader/writer can deal with a plurality of credit card applications, it is necessary for a user to designate which credit card is used. That is, it means that IC cards other than the IC card application which is about to be used are hidden from the peripheral reader/writer, so that they are not selected by the peripheral reader/writer.

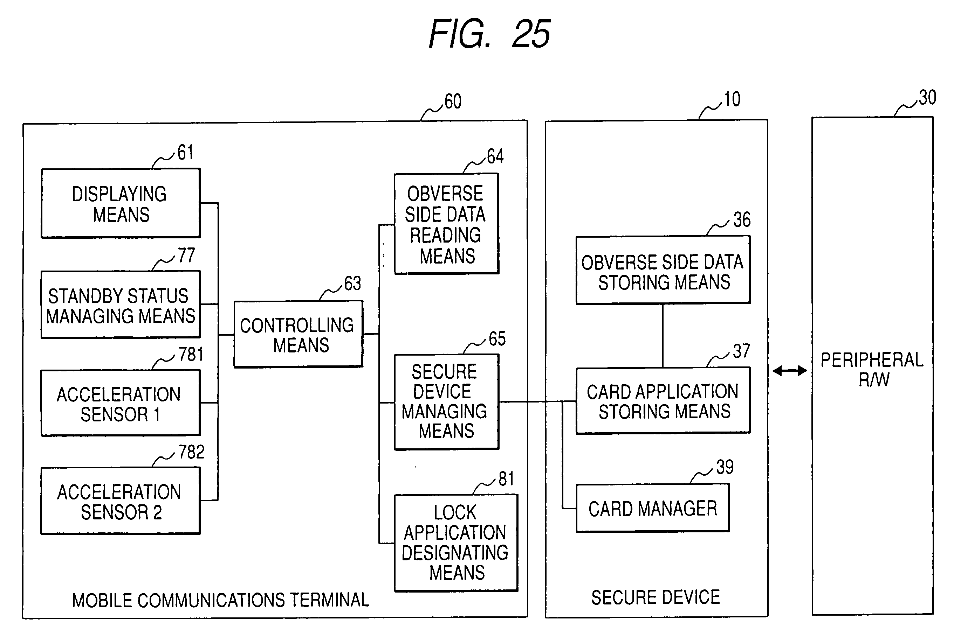

For this reason, as shown in FIG. 25, the mobile communications terminal 60 includes lock application designating means 81 to lock IC card applications other than the IC card application corresponding to the displayed obverse side image.

The lock application designating means 81 designates IC card applications other than the IC card application corresponding to the display obverse side image to the card manager 39 of the secure device 10, and transmits a card setting command, which instructs so as to deny the commencement thereof (that is, so as to lock them) through the secure device managing means 65. The secure device managing means 65 transmits the card setting command to the card manager 39 after requesting identification of the lock application designating means 81.

The card manager 39 that has received the card setting command activates the card so that it returns an error only one time (that is, it locks the IC card application only one time) when the peripheral reader/writer 30 selects the locked IC card application.

For example, where it is assumed that the secure device 10 includes a credit application of enterprise A and a credit application of enterprise B and the obverse side of the credit card of enterprise B is displayed on the display screen of the mobile communications terminal 60. If the mobile communications terminal 60 is "exposed" to a peripheral reader/writer 30 of a credit terminal, the peripheral reader/writer 30 returns to the secure device 10 a command for selecting an application intended to be started among the applications internally incorporated in the secure device 10.

If the peripheral reader/writer 30 returns a command of selecting the credit application of enterprise A, the card manager 39 of the secure card 10 responds with an error, and next, if the peripheral reader/writer 30 returns a command of selecting the credit application of enterprise B, the card manager 39 makes a response that the selection is satisfactory, wherein processing is carried out between the peripheral reader/writer 30 and the credit application of enterprise B.

Herein, since an IC card application to be locked is newly established by the lock application designating means 81 if a new obverse side of a card is displayed on the display screen of the mobile communications terminal 60, it is sufficient that the IC card application is locked one time by the card manager 39.

By such an action, a process of using the card function, in which an obverse side image is displayed on the display screen of the mobile communications terminal 60, is carried out.

Therefore, a user is able to select and use a desired card function from the secure device having a plurality of card functions. In addition, the selection can be simply operated by a single hand.

Also, a description was given of an action of swinging the secure device. However, the obverse side of the card may be displayed and updated in response to an action of a card holder other than the above, for example, tapping the secure device with a finger tip or touching the display screen.

Further, herein, a description was given of the case where contact communications are carried out between the secure device and the mobile communications terminal 60, or contactless communications are directly carried out between the secure device and a peripheral reader/writer 30. However, it may be constructed that the mobile communications terminal 60 is provided with a contact communications I/F with the secure device and a contactless communications I/F with a peripheral reader/writer 30, and the mobile communications terminal 60 intermediates between the secure device and the peripheral reader/writer 30.

### (Embodiment 9)

In Embodiment 9 according to the invention, a description is given of a mobile communications terminal which continuously displays an obverse side image corresponding to a card function used, until a fixed period of time elapses after a card process is terminated in the secure device.

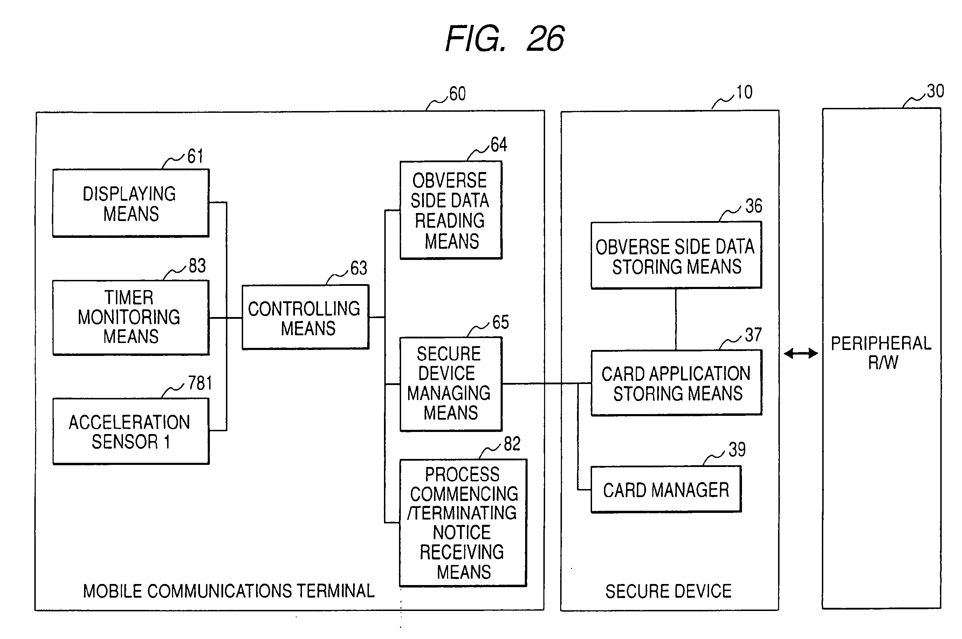

The mobile communications terminal 60 that carries out the process includes, as shown in FIG. 26, process commencing/terminating notice receiving means 82 which obtains information of commencement and termination of a contactless communications process from the secure device 10, and timer monitoring means 83 for counting the elapsed time. Other configurations remain unchanged from that shown in FIG. 24.

If the first acceleration sensor 781 detects "horizontal swing," the controlling means 63 receives a display instruction of an obverse side image and gives the obverse side data reading means 64 an instruction of reading out the obverse side data, and the obverse side image is displayed in the displaying means 61. The timer monitoring means 83 counts the elapsed time from the moment when the first acceleration sensor 781 detects "horizontal swing." If the first acceleration sensor 781 detects "horizontal swing" again before a fixed period of time elapses since the counting starts, the timer monitoring means 83 resets the measurement time and begins counting the elapsed time again. In addition, since the first acceleration sensor 781 detects "horizontal swing," the controlling means 63 gives the obverse side data reading means 64 an instruction of reading out the next obverse side data, and the next obverse side image is displayed in the displaying means 61.

As the measurement time of the timer monitoring means 83 reaches a fixed period of time with a user not swinging the mobile communications terminal 60, the timer monitoring means 83 transmits it to the controlling means 63, and the controlling means 63 stops displaying an obverse side image in the displaying means 61 where no notice is received from the process commencing/terminating notice receiving means 82.

On the other hand, the process commencing/terminating notice receiving means 82 monitors the processing state of the secure device 10, wherein it acquires the information at the moment when the secure device 10 commences contactless communications with a peripheral reader/writer 30 and at the moment when the secure device 10 terminates the contactless communications where a user exposes the mobile communications terminal 60 to the peripheral reader/writer 30 and causes the secure device to 10 execute card processing. And, the process commencing/terminating notice receiving means 82 transmits the information to the controlling means 63.

The controlling means 63 continuously displays the same obverse side image in the displaying means even if it receives a notice of elapsed time of a fixed period from the timer monitoring means 83 after receiving a notice of commencement of contactless communications from the process commencing/terminating notice receiving means 82.

Also, the controlling means 63 gives the timer monitoring means 83 an instruction of measuring a fixed period of time when it receives a notice of termination of contactless communications from the process commencing/terminating notice receiving means 82, and continuously displays the same obverse side image in the displaying means 61 until the fixed period of time elapses. And, when the controlling means 63 receives a notice of elapsed time of the fixed period from the timer monitoring means 83, the controlling means 63 stops displaying the obverse side image in the displaying means 61.

Here, a description was given of an action of swinging the secure device. However, an obverse side image is displayed and updated in response to an action of the holder other than the above-described action, for example, an action of tapping the secure device with a finger tip or touching the display screen.

Thus, since, where a contactless communications process of the secure device 10 is carried out, an obverse side image of the card function used for the process is displayed in the mobile communications terminal until a fixed period of time elapses after the process is terminated, it is possible to easily identify on the basis of which card function the service has been executed. In addition, in a case where a user displays an obverse side image on the screen of the mobile communications terminal 60 and only checks the card function of the secure device 10, the obverse side image automatically disappears when a fixed period of time elapses. Therefore, it is possible to omit the deleting operation.

### (Embodiment 10)

As Embodiment 10 according to the invention, a description is given of a case where a multi-application IC card is mounted in a mobile communications terminal. The mobile communications terminal sequentially displays the service contents of a multi-application IC card mounted in the mobile communications terminal 20 on the display screen 21 using the obverse side.

The obverse side 31 expresses an obverse side design of an independent card, and a user can understand the type of the card by only looking at the obverse side of the card. The obverse side 31 displaced in the mobile communications terminal 20 changes one after another by operating the mobile communications terminal 20, wherein the obverse sides 31 corresponding to the services stored in the multi-application IC card are sequentially displayed.

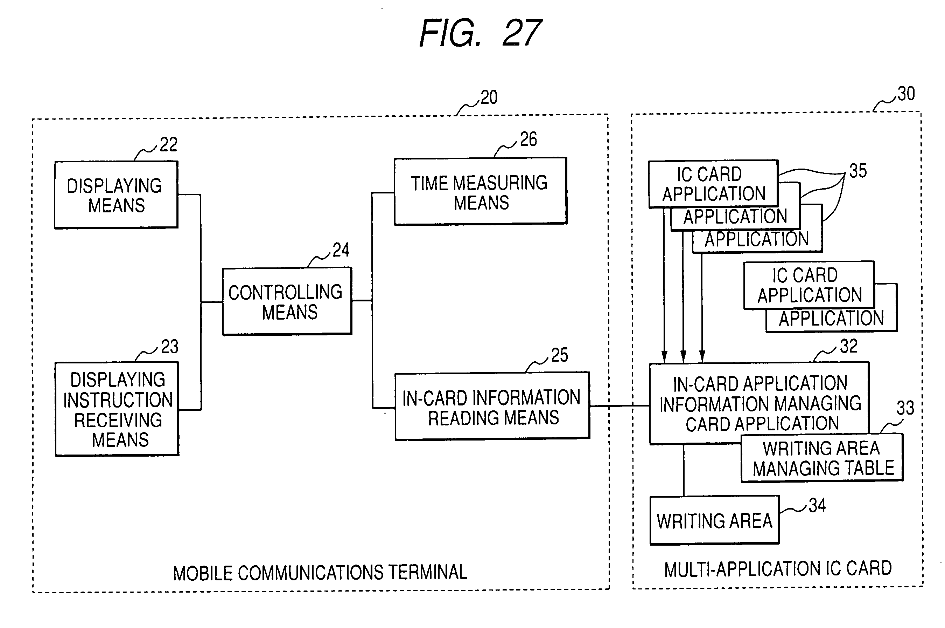

FIG. 27 shows a configuration regarding the obverse side display with respect to the mobile communications terminal 20 and the multi-application IC card 30 held by the mobile communications terminal 20. The multi-application IC card 30 includes a plurality of IC card applications 35 for executing the card functions, an in-card application information managing card application 32 for registering data of the obverse side data for which writing is requested by the respective IC card applications 35, a writing area 34 in which the data are stored, and a writing area managing table 33 which the in-card application information managing card application 32 uses to manage the writing area 34.

On the other hand, the mobile communications terminal 20 includes display instruction receiving means 23 for receiving operations of display instructions of a user, in-card information reading means 25 for reading out obverse side data registered in the writing area 34 of the multi-application IC cards 30, displaying means 22 for displaying the obverse side data read out by the in-card information reading means 25, time measuring means 26 for measuring the elapsed time from an instruction of display, and controlling means 24 for controlling the display.

The in-card application information managing card application 32 of the multi-application IC cards 30 has an interface which all the IC card applications 35 commonly use, and the respective IC card applications 35 make access to the in-card application information managing card application 32 and can register the data read out by the mobile communications terminal 20.

The in-card application information managing card application 32 can be achieved by utilizing a shareable interface in JAVA (Registered Trade mark) cards in which card applications can be prepared in, for example, the language of JAVA (Registered Trade mark). In the IC card, card applications are isolated from each other by firewalls so that a plurality of card applications can coexist. However, the shareable interface is an interface capable of accessing the card applications without any obstruction by the firewalls.

In addition, the in-card information reading means 25 of the mobile communications terminal 20 is freely capable of accessing the in-card application information managing card applications 32 after mutual identification with the in-card application information managing card applications 32 is successful.

Data which the IC card applications 35 request the in-card application information managing card applications 32 to register (write), and the registration period thereof are selected and established by the respective IC card applications 35. The respective IC card applications 35 are capable of registering data at optional timing when installing in the multi-application IC cards 30 and carrying out a specified process.

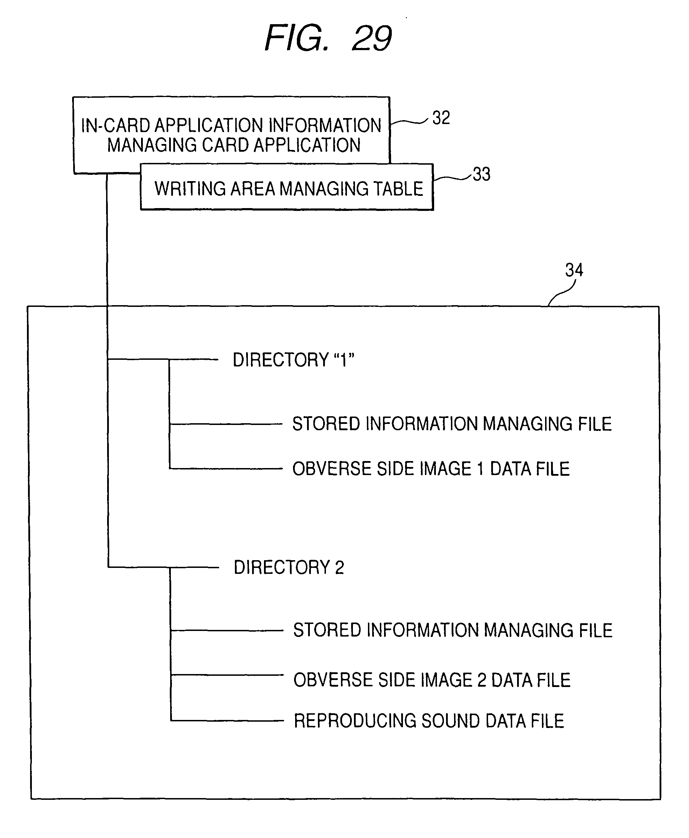

The in-card application information managing card application 32 writes data, which are requested to be written by the respective IC card applications 35, in the writing area 34 while being divided file by file in the unit of the IC card applications 35. FIG. 29 illustrates a data structure of the writing area 34 at this time. Division domains of the writing area 34 for which directory names are established store stored information managing files in which management information is recorded, and data files in which real data are stored, wherein data of the obverse side images and sound data expressed together with the obverse sides are registered as real data.

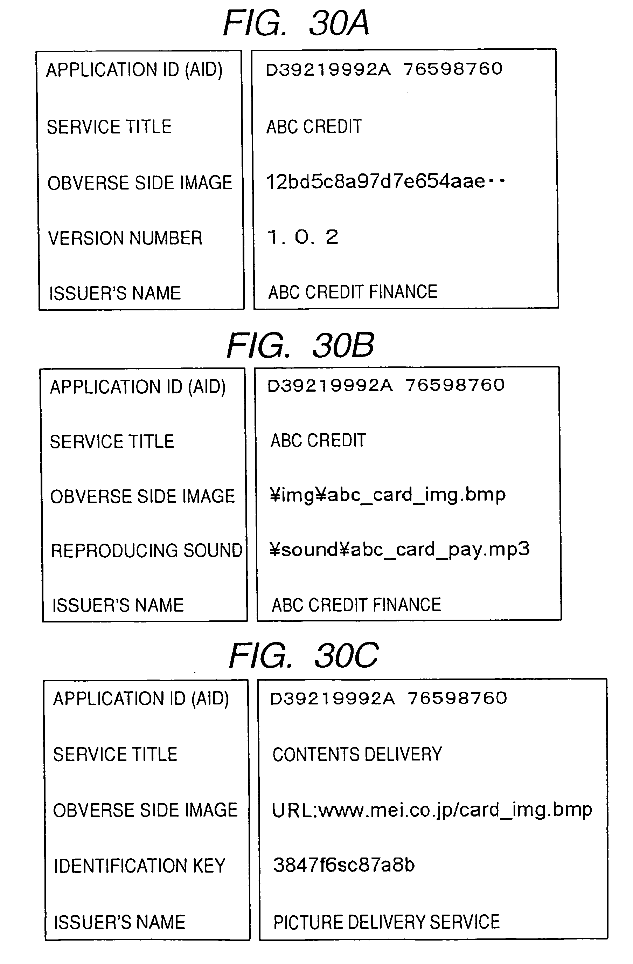

As shown in FIGS. 30A and 30B, IDs (AIDs) and service names of the IC card applications 35, information designating the obverse side images and reproduction sound data, version number of data, issuer's name of data, etc., are written in the stored information managing files. Also, as shown in FIG. 30C, it is possible to write a URL showing the source of acquisition of the obverse side image data, and identification keys used for mutual identification when acquiring the same, in the stored information managing files. Where the mobile communications terminal 20 acquires the information, the mobile communications terminal 20 acquires the obverse side image data from the source of acquisition and displays the obverse sides.

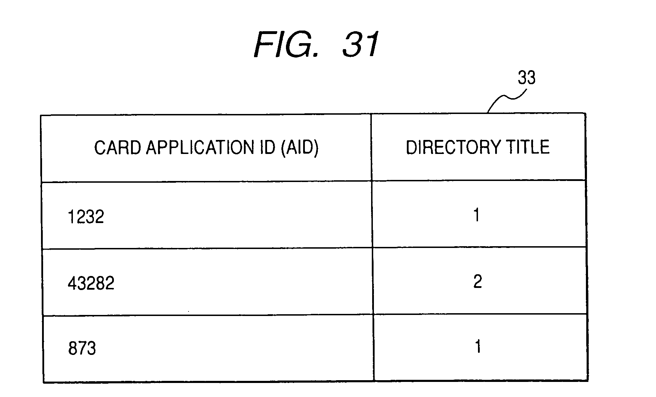

FIG. 31 illustrates information described in the writing area managing table 33, in which AIDs of the IC card applications 35 and directory names corresponding thereto are described.

The IC card applications 35 are able to write data with respect to the in-card application information managing card applications 32. However, it is not possible to make an access to the data registered by the other IC card applications 35. In addition, the in-card application information managing card applications 32 overwrite new data onto the previously registered data and update the data when a request of writing data is issued from the same IC card application 35 again.

On the other hand, the registered data are deleted when a request of deletion is provided directly from a server of a service provider to the in-card application information managing card applications 32. Furthermore, it is possible to request deletion from the IC card application 35 to the in-card application information managing card application 32.

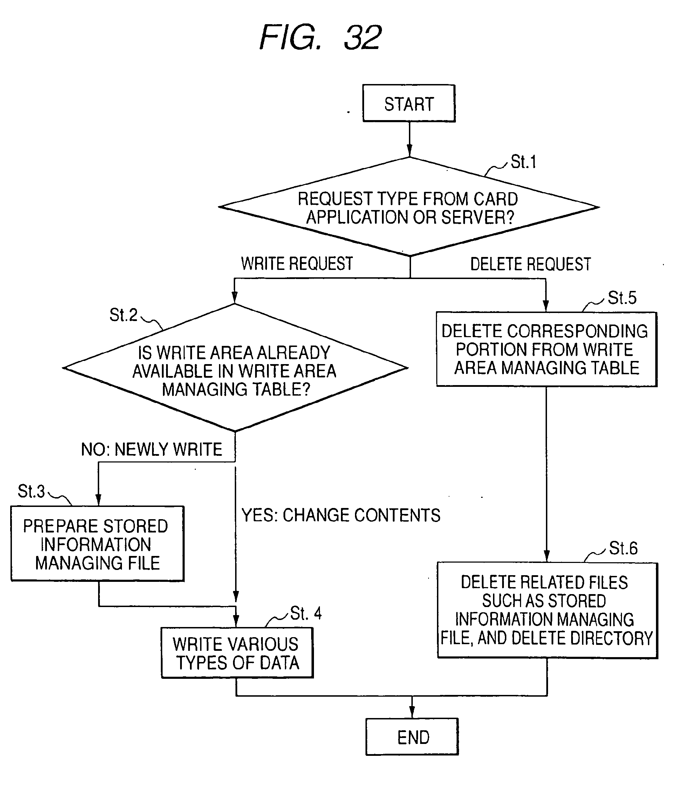

FIG. 32 shows a storage processing flow of data into the writing area 34.

The in-card application information managing card application 32 identifies the type of request of the IC card application 35 (or server) which requires access (Step 1). If there is a write request from the IC card application 35, with reference to the write area managing table 33, it is identified whether or not a division domain corresponding to the AID of the IC card application 35 is established (Step 2). If the division domain is not established, that is, in a case of new writing, a stored information managing file is newly established, and the relationship between the AID and directory name is described in the writing area managing table 33 (Step 3). Then, various types of data requested to be written are written in the stored information managing files and data files (Step 4).

Also, in Step 2, when the directory name corresponding to the IC card application 35 which requests writing is described in the writing area managing table 33, the data of the file stored in the corresponding division domain are updated on the basis of the writing request (Step 4).

Further, in Step 1, when the request type is a request of deletion is provided from the server, the corresponding point is deleted from the writing area managing table 33 (Step 5), files related to the corresponding stored information managing files and data files are deleted from the writing area 34, and the directories thereof are deleted (Step 6).

On the other hand, as the display instruction receiving means 23 receives a display instruction of a user, the controlling means 24 gives the in-card information reading means 25 an instruction of acquiring information from the multi-application IC card 30, and the in-card information reading means 25 makes access to the in-card application information managing card application 32 of the multi-application IC card 30, and acquires data corresponding to one IC card application 35 stored in one division domain of the writing area 34 after mutual identification is conducted.

Information exchange between the in-card information reading means 25 and the in-card application information managing card application 32 is carried out by the in-card information reading means 25 transmitting a command in the format of APDU (Application Protocol Data Unit) regulated by ISO/IEC 7816-4 and the in-card application information managing card application 32 returning a "response" thereto.

The controlling means 24 interprets information which the in-card information reading means 25 acquires, and displays the obverse side images and sound data through the displaying means 22.

If a display instruction of a user is carried out in a fixed period of time measured by the time-measuring means 26, the in-card information reading means 25 acquires data stored in the next division domain of the writing area 34, and the obverse side image and sound data, which correspond to the next IC card application 35, are displayed through the displaying means 22.

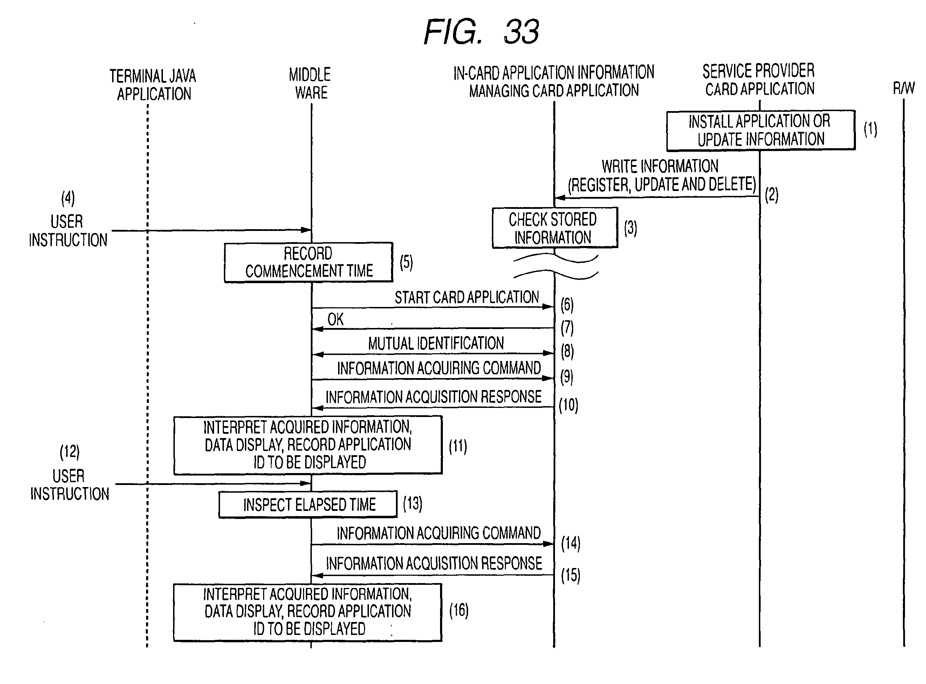

FIG. 33 shows a sequence view for displaying the service contents of the multi-application IC cards 30 using the obverse side, etc. Also, herein, the display instruction receiving means 23 of the mobile communications terminal 20, in-card information reading means 25 thereof and the controlling means 24 are expressed as middle wares.

The service provider installs the IC card application 35 in the multi-application IC card 30, or updates the information expressing the service content (1). The IC card application 35 makes access to the in-card application information managing card application 32 at prescribed timing and registers or updates the information (2). Also, the registered information is deleted by the service provider accessing the in-card application information managing card application 32. And the in-card application information managing card application 32 checks the stored information (3).

On the other hand, if a user instructs display of information such as the obverse side from the mobile communications terminal 20 (4), the controlling means 24 records the time, which is presented by the time measuring means 26, as commencement time (5). The in-card information reading means 25 transmits a command of commencing the in-card application information managing card application 32 (6), wherein if the started in-card application information managing card application 32 makes a response thereto (7), the in-card information reading means 25 carries out mutual identification with the in-card application information managing card application 32 (8), and if the identification is successful, the in-card information reading means 25 transmits an information acquisition command to the in-card application information managing card application 32 (9). The in-card application information managing card application 32 reads out data stored in one division domain of the writing area 34 and transmits the same data to the in-card information reading means 25 (10). The controlling means 24 of the mobile communications terminal 20 interprets the information which the in-card information reading means 25 acquired, records the AID included in the information, and displays the obverse side image and reproduction sounds through the displaying means 22 (11).

If a user instructs display of information (12), the controlling means 24 acquires the measurement time of the time measuring means 26 and inspects the elapsed time from the commencement time (13), wherein if the elapsed time is within predetermined time, the controlling means 24 transmits the previously recorded AID to the in-card information reading means 25, and instructs information acquisition of the next IC card application 35. If the elapsed time exceeds the prescribed time, the IC card application 35 is not designated. The in-card information reading means 25 transmits the information acquisition command including the AID obtained from the controlling means 24 to the in-card application information managing card application 32 (14). The in-card application information managing card application 32 confirms the directory of AID described next to the AID transmitted from the in-card information reading means 25 with reference to the writing area managing table 33, reads out the data stored in the area corresponding to the writing area 34, and transmits to the in-card information reading means 25 (15).

The controlling means 24 of the mobile communications terminals 20 interprets the information acquired by the in-card information reading means 25, records the AID included in the information and displays the obverse side image and reproduction sounds through the displaying means 22 (16).

Whenever a user instructs information display in a prescribed period of time (for example, 10 seconds), processes (13) through (16) are repeated, and the information of the obverse side expressing the service contents of the multi-application IC card 30 is sequentially displayed.

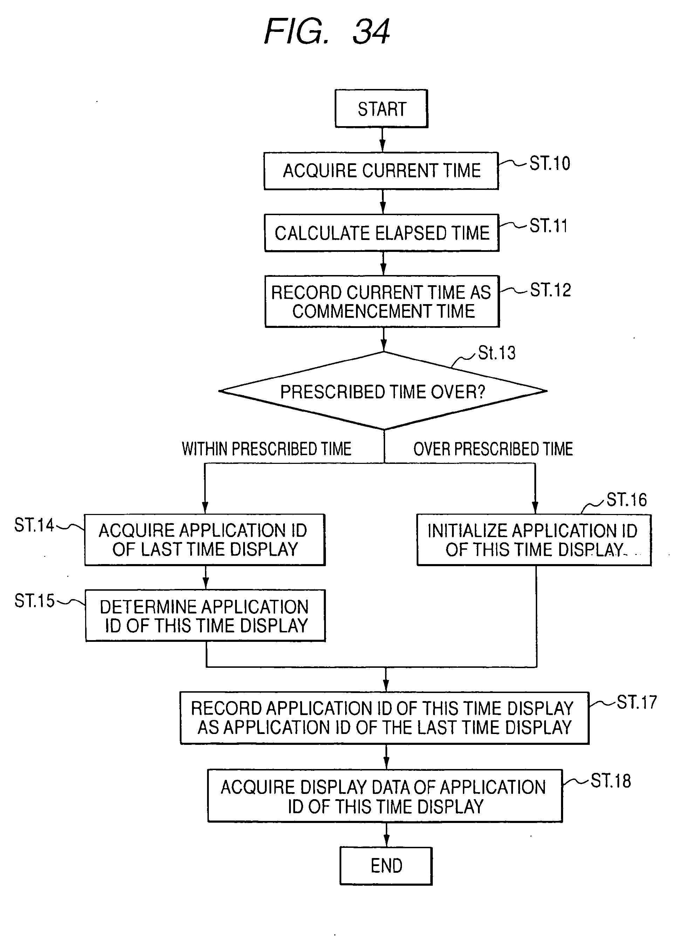

Also, the in-card application information managing card application 32 proposes information of the writing area managing table 33 to the mobile communications terminal 20 in accordance with the first information acquisition request (9) of the in-card information reading means 25, and the controlling means 24 of the mobile communications terminal 20 may designate an IC card application 35, which is a display object, on the basis of the above-described information, thereafter, when the user instructs information display. In this case, the flow diagram of FIG. 34 shows a procedure along which the controlling means 24 determines an IC card application 35 being a display object.

The controlling means 24 acquires the present time from the time measuring means 26 (Step 10), calculates the elapsed time from the last recorded commencement time (Step 11), and records the present time as commencement time for measuring the elapsed time of the next display instruction (Step 12).

It is judged whether or not the elapsed time obtained in Step 11 exceeds a prescribed period of time (Step 13). If the lapse time is within the prescribed period of time, the recording of the AID, which was an object of display last time, is acquired (Step 14), and the AID, which becomes an object of display this time, is determined (Step 15).

Next, the AID which becomes an object of display this time is recorded as the AID of the previous display object (Step 17), and the display data of the AID which becomes a display object this time are acquired (Step 18).

Also, in Step 13, when the elapsed time exceeds a prescribed period of time, the AID which becomes a display object this time is initialized (set to the default) (Step 16), the AID which becomes a display object this time is recorded as the AID of the display object last time (Step 17), wherein the display data of the AID of the display object this time are acquired (Step 18).

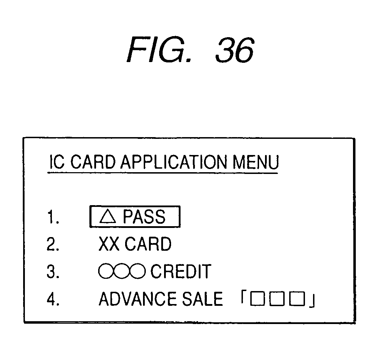

In addition, as shown in FIG. 36, whenever a user swings a mobile communications terminal 20 with an accelerator sensor 27 provided in the mobile communications terminal 20, the accelerator sensor 27 detects the swing, and the swing may be received as a display instruction of the user.

Thus, in the mobile communications terminal 20 according to the invention, if a user does not know the identification method with individual IC card applications 35 stored in a multi-application IC card 30 and accessing method thereto, the respective IC card applications 35 is capable of acquiring data, which are desired to be presented to the user, only by accessing the in-card application information managing card application 32.

With respect to many individual IC card applications 35, the identification method and accessing method are not laid open in view of security. Therefore, it is difficult to acquire information by the mobile communications terminal 20 accessing individual IC card applications 35, and when being observed on the side of the IC card applications, provision of information to the mobile communications terminal 20 threatens safety.

However, in the present invention, the multi-application IC card 30 is provided with in-card application information managing card applications 32 equipped with an interface commonly used by all of the IC card applications 35, and the in-card application information managing card applications 32 are caused to function as means for storing data for presenting. Therefore, the respective IC card applications 35 can present data desired to be presented to the mobile communications terminal 20 in safety, and the mobile communications terminal 20 can efficiently acquire the data presented by the respective IC card applications 35.

Also, since security and safety are secured in presented data, the respective IC card applications 35 can provide various types of data including not only data of the obverse side images but also data instructing reproduction of sounds expressing the brand marks of services, data instructing lighting of LEDs, data instructing activation of vibrations, etc., without any hesitation. As a result, when the obverse side image is displayed in the mobile communications terminal 20, the sound of the brand mark is reproduced, and an LED is lit or vibration is activated, wherein the appealing method of services is diversified, and services included in the multi-application IC cards 30 are made further comprehensible to users.

Further, with respect to the obverse side image presented to the mobile communications terminal 20, not only the surface design of a card but also the image of the reverse side may be presented thereto.

Still further, the format of a stored information managing file in registering data in the writing area 34 may be regulated or a universal format like XML may be used.

In addition, the obverse side images of respective services included in the multi-application IC card 30 may be sequentially displayed by instructions of a user or may be displayed at one time in the form of tile arrangement.

In an information storing unit according to the invention, card functions internally incorporated therein may be displayed by using the images of the obverse side of a card, wherein a user can intuitively interpret the card functions internally incorporated in the information storing unit on the basis of the obverse side image. Also, an information processing unit according to the invention reads out the obverse side data from the information storing unit and can display a card obverse side image expressing card functions internally incorporated in the information storing unit. Therefore, the user can intuitively interpret the card function internally incorporated in the information storing unit on the basis of the obverse side image.

Furthermore, a secure device according to the invention can display only the data desired to be presented to the user through the information processing unit, and the security of the card applications can be secured in the presented data.

And, even if a user does not know the accessing method to individual card applications and an identification method therefor, the information processing unit according to the invention can efficiently acquire the data that the respective card applications intend to present, and the data can be displayed therein.

## Claims

1. A secure device having one or more card functions, comprising:
means for storing card information to carry out an optional card function; and
means for storing obverse side data to display an image corresponding to said card information, which is the obverse side of the card.

2. The secure device according to Claim 1,
wherein said obverse side data storing means holds the surface data for displaying the surface image of a card as the obverse side data.

3. The secure device according to Claim 2,
wherein said obverse side data storing means further holds reverse side data for displaying the reverse side image of a card as the obverse side data.

4. The secure device according to Claim 1, further comprising:
sound data storing means for holding sound data to reproduce sounds corresponding to said card information.

5. The secure device according to Claim 1, further comprising:
deformation data storing means for holding data of images corresponding to said card information, which are deformation images whose data amount is smaller than said obverse side data.

6. The secure device according to Claim 1 or 2, further comprising:
means for displaying the obverse side images using said obverse side data.

7. The secure device according to Claim 3, further comprising:
first means for displaying the obverse side image of a card using said obverse side data; and
second means for displaying the reverse side image of a card using said reverse side data.

8. The secure device according to Claim 3, further comprising:
means for displaying the obverse side image using said obverse side data; wherein said displaying means displays the reverse side image of a card next to the image of the surface of the card, or displays the image of the surface next to the reverse side image thereof.

9. An information processing unit making access to a secure device, which holds card information to execute an optional card function and obverse side data to display the obverse side image of said card corresponding to said card information, and reading out said obverse side data, comprising:
means for displaying an image on the basis of the obverse side data read out from said secure device;
means for receiving a display instruction of the obverse side image; and
means for controlling reading-out of said obverse side data and image display of said displaying means on the basis of a display instruction received by said display instruction receiving means.

10. The information processing unit according to Claim 9,
wherein said displaying means includes:
a first displaying portion for displaying an image of the surface of a card by using the surface data, which are included in said obverse side data, for displaying an image of the surface of a card; and
a second displaying portion for displaying an image of the reverse side of a card by using the reverse side data, which are included in said obverse side data, for displaying an image of the reverse side of a card.

11. The information processing unit according to Claim 9,
wherein said displaying means alternately displays the surface data for displaying an image of the surface of a card, which is included in said obverse side data, and the reverse side data for displaying an image of the reverse side of the card.

12. The information processing unit according to Claim 9, further comprising:
surface data processing means for processing the obverse side data read out from said secure device in accordance with an image size and display resolution power of said displaying means.

13. The information processing unit according to Claim 9, further comprising:
means for reading out data of deformation images from said secure device,
wherein said displaying means displays a deformation image using said deformation data, and
wherein said obverse side data reading means reads out said obverse side data after said displaying means displays said deformation image, and said displaying means displays the obverse side image.

14. The information processing unit according to Claim 9, further comprising:
means for reading out data of deformation images from said secure device; and
means for selecting display contents displayed in the information processing unit on the basis of an image size and display resolution power of said displaying means,
wherein said obverse side data reading means or said deformation data reading means reads out data from said secure device on the basis of the display content selected by said display data selecting means, and
wherein said displaying means displays an image using the data read out from said secure device.

15. The information processing unit according to Claim 14,
wherein said secure device holds data of deformation images and data of sounds in addition to said obverse side data, and
wherein said display data selecting means selects display contents displayed by the information processing unit among the obverse side data, deformation image data and sound data.

16. The information processing unit according to Claim 9, which reads out all the obverse side data from said secure device, holds the same in a memory area, displays an image of the obverse side in said displaying means using the obverse side data read out from said memory area, and updates the obverse side data of said memory area by the obverse side data periodically read out from said information storing unit.

17. The information processing unit according to Claim 9,
wherein said display instruction receiving means detects that the information processing unit is swung, and receives the swing as a display instruction.

18. The information processing unit according to Claim 9,
wherein said controlling means controls the image display of said displaying means based on the detection information of said display instruction receiving means having detected that the information processing unit is swung, and the status of the information processing unit.

19. The information processing unit according to Claim 9,
wherein said controlling means controls image display of said displaying means based on a detection direction of said display instruction receiving means having detected the direction along which the information processing unit is swung.

20. The information processing unit according to Claim 9,
wherein, when the display instruction receiving means does not detect a next display instruction even if a fixed period of time elapses since the obverse side image is displayed by said displaying means, said controlling means controls the information processing unit so that the information processing unit is returned to the status before displaying the obverse side data.

21. The information processing unit according to Claim 9,
wherein said controlling means controls commencement of power supply to said secure device based on a detection information of said display instruction receiving means having detected that the information processing unit is swung.

22. An information processing unit incorporating a secure device that holds a plurality of card information to carry out a process in relation to an optional card and the obverse side data to display an image of the obverse side of said card corresponding to said card information, comprising:
means for reading out the obverse side data from said secure device;
means for displaying an image of the obverse side using the read-out obverse side data; and
means for controlling processes related to the obverse side data reading means, displaying means and card information.

23. The information processing unit according to Claim 22,
wherein, when said secure device carries out a process regarding the card information selected by communications with a peripheral unit, said displaying means displays an image of the obverse side corresponding to said card information at the moment of time when said process is commenced.

24. The information processing unit according to Claim 23, further comprising:
means for designing lock applications, which designates all the card information other than the card information corresponding to the obverse side displayed by said displaying means and instructs start and stop of a designated card information.

25. The information processing unit according to Claim 24,
wherein said lock application designating means gives said secure device an instruction so that selection of a peripheral unit corresponding to the designated card information is denied only one time.

26. The information processing unit according to Claim 23,
wherein said controlling means controls said displaying means so that an image of the obverse side displayed by said displaying means at the moment of time of commencing a process related to the card information of said information storing unit is continuously displayed until a fixed period of time elapses after said process is terminated.

27. A secure device having one or a plurality of card applications stored therein, comprising:
means for storing data presented to a unit in which said corresponding secure device is held,
wherein said card application registers data requested to be presented by said unit in said storing means.

28. The secure device according to Claim 27,
wherein obverse side data expressing the obverse side of a card are registered in said storing means.

29. The secure device according to Claim 27,
wherein sound data are registered in said storing means along with the image data expressing the obverse side of a card.

30. The secure device according to Claim 27,
wherein lighting instruction data of lighting means of said unit are registered in said storing means along with the image data expressing the obverse side of a card.

31. The secure device according to Claim 27,
wherein action instruction data of vibration displaying means of said unit are registered in said storing means along with the obverse side data expressing the obverse side of a card.

32. The secure device according to Claim 27,
wherein said storing means includes a common interface for said card applications.

33. The secure device according to Claim 32,
wherein said storing means prohibits that card applications other than the card applications access the data registered by the card application.

34. An information processing unit having a secure device, comprising:
means for receiving a display instruction;
means for reading out obverse side data registered in the storing means of said secure device;
means for displaying an image of the obverse side using said obverse side data; and
means for instructing read-out of obverse side data from the storing means of said secure device to said data reading means, transmitting said obverse side data read out by said data reading means to said displaying means and displaying an image of the obverse side when said display instruction receiving means receives a display instruction.

35. The information processing unit according to Claim 34,
wherein said controlling means designates the next obverse side data to be read out in said data reading means when said display instruction receiving means receives a next display instruction within a prescribed period of time after receiving the last display instruction.
